# EUROPÄISCHE PATENTSCHRIFT

(11) **EP 3 230 539 B1**
(45) Veröffentlichungstag und Bekanntmachung des Hinweises auf die Patenterteilung: **11.01.2023**
(21) Anmeldenummer: 15791607.3
(22) Anmeldetag: 09.11.2015
(51) Int. Cl.: E04H 12/08, F03D 13/10, F03D 13/20, E04H 12/00

(54) **VERFAHREN ZUM ERRICHTEN EINES ROHRTURMBAUWERKS UND ROHRTURMBAUWERK**
METHOD FOR ERECTING A TUBULAR TOWER CONSTRUCTION AND TUBULAR TOWER CONSTRUCTION
PROCÉDÉ POUR ÉRIGER UNE CONSTRUCTION DE TOUR TUBULAIRE ET TOUR TUBULAIRE

(30) Priorität: 09.12.2014 DE 102014118251; 16.09.2015 DE 102015115645
(43) Veröffentlichungstag der Anmeldung: 18.10.2017
(73) Patentinhaber: SIAG Industrie GmbH, 04347 Leipzig (DE)
(72) Erfinder: TATERRA, Hermann-Josef, 19073 Wittenförden (DE)
(74) Vertreter: HGF
(86) Internationale Anmeldenummer: PCT/EP2015/076045
(87) Internationale Veröffentlichungsnummer: WO 2016/091499

(56) Entgegenhaltungen:
- EP-A1- 1 561 883
- WO-A1-2009/097858
- WO-A1-2010/055535
- KR-A- 20120 073 785
- US-B1- 7 464 512

## Beschreibung

Die Erfindung betrifft ein Verfahren zum Errichten von Rohrturmbauwerken.

Rohrturmbauwerke sind bekannt, insbesondere als Träger von Windenergieanlagen. Hierbei ist es insbesondere bekannt, aus Stahlblech Rohrabschnitte zu fertigen und die Rohrabschnitte übereinander mit umlaufenden Schweißnähten zu einem Rohrturm zusammenzusetzen, welcher an seinem oberen Ende eine Windenergiegondel aufnimmt. Um die einzelnen Segmente miteinander zu verbinden ist es bekannt, diese entweder zu verschweißen oder mit aufeinanderliegenden, umlaufenden Flanschen so zu versehen, dass die aufeinander liegenden Flansche miteinander verschraubt werden können.

Darüber hinaus ist es bekannt, derartige Turmbauwerke aus Teilschalen auszubilden, wobei die Teilschalen an ihren Längskanten Flansche besitzen, mit denen diese Teilschalen aneinander geschraubt werden.

Aus der WO 2011/092235 A2 ist ein Windenergieanlagenturmsegment bekannt, welches auch als Mantelsegment ausgebildet ist und aus einem Stahlbetonkörper besteht, mit zwei Stößen zum Ansetzen an Stöße wenigstens eines weiteren Turmsegments und in den Stahlbetonkörper im Bereich jeden Stoßes wenigstens ein Verbindungskörper eingelassen und darin verankert ist zum Verbinden mit einem Verbindungskörper eines benachbarten Turmsegments und der Verbindungskörper eine im Wesentlichen parallel zum jeweiligen Stoß angeordnete Befestigungswandung aufweist zum Aufnehmen einer quer zum Stoß und quer zur Befestigungswandung gerichteten Zugbelastung. Bei einer solchen Vorrichtung ist von Nachteil, dass es relativ aufwendig ist, derartige Betonschalen zu gießen und zudem pass- und maßgenau herzustellen. Ferner ist der Rückbau derartiger Stahlbetontürme recht aufwendig und teuer.

Aus der DE 10 2010 039 796 A1 ist ein Turm mit einem Adapterstück sowie ein Verfahren zur Herstellung eines Turm mit dem Adapterstück bekannt, wobei hier ebenfalls ein unterer rohrförmiger Turmabschnitt aus Beton und ein oberer rohrförmiger Turmabschnitt aus Stahl ausgebildet ist. Derartige Hybridtürme werden derzeit für die Errichtung besonders hoher Windenergieanlagentürme bevorzugt, da mit dem Betonunterbau große Durchmesser möglich sind und auf die Unterbautürme in dieser Weise herkömmliche Windenergieanlagentürme oben aufgesetzt werden können, um größere Höhen und damit eine bessere Windausbeute zu erreichen. Hierbei ist jedoch nachteilig, dass der Rückbau eines Betonturms relativ aufwendig ist und der Montageaufwand für Betontürme relativ hoch ist, insbesondere durch die Betonanlieferung.

Aus der WO 2010/121630 A2 ist ein Turm für eine Windkraftanlage mit einer Mehrzahl von Eckstielen zur Bildung einer Maßkonstruktion bekannt, wobei die Eckstiele jeweils aus mehreren miteinander verbundenen Teilprofilen zusammengesetzt sind. Hierbei sind die Eckstiele jeweils aus mehreren miteinander verbundenen Teilprofilen so zusammengesetzt, dass Anschlussbereiche gebildet sind an benachbarten Teilprofilen, welche jedoch aus den Teilprofilen ausgebogen sind. Bei dieser Ausführungsform ist von Nachteil, dass hiermit präzises und schnelles Arbeiten erschwert wird.

Aus der DE 10 2009 058 124 B4 ist ebenfalls ein Betonunterbau für den Turm einer Windenergieanlage bekannt.

Aus der DE 10 2011 011 603 A1 ist ein Lastaufnahmemittel zum Anheben von schweren Komponenten oder Anlagenteilen, insbesondere Offshore-Anlagen bekannt.

Aus der DE 203 21 897 U1 ist eine Windturbine mit einem stationären vertikalen Mast oder Turm bekannt, an welchem der bewegliche Teil der Windturbine angeordnet ist, wobei der Mast zumindest teilweise aus vorgefertigten Wandteilen besteht, wobei mehrere benachbarte Wandteile einen im Wesentlichen ringförmigen Mastabschnitt ausbilden. Hierbei sind die Wandteile oder Segmente aus verstärktem Beton oder einem anderen steinartigen Material aufgebaut und bereits vorgefertigt. Die Befestigung der Betonelemente aneinander erfolgt mit Zuganfang.

Aus der DE 10 2011 001 250 A1 sind eine Vorrichtung und ein Verfahren für den Übergang zwischen einem Stahlturmabschnitt und einem vorgespannten Betonturmabschnitt bekannt.

Aus der DE 10 2011 077 428 A1 ist ein Windenergieanlagenturm bekannt mit einer Mehrzahl von vorgefertigten Turmsegmenten, welche jeweils einen oberen und unteren horizontalen Flansch aufweisen, wobei eines der Mehrzahl der Turmsegmente mindestens zwei Längsflansche aufweist, wobei jeder Längsflansch eine erste Seite zum Anlegen an eine erste Seite eines weiteren Längsflansches und eine zweite Seite aufweist, welche an die Mantelfläche seitlich angeschweißt ist, wobei die zweite Seite der ersten Seite gegenüberliegt.

Aus der DE 11 2010 005 382 T5 ist ein Wandabschnitt für einen Windkraftanlagenturm bekannt, wobei der Wandabschnitt ein erstes Wandsegment und ein zweites Wandsegment umfasst, sowie ein Verbindungselement, welches einen ersten Oberflächenabschnitt, der an dem ersten Wandsegment angebracht ist und sich in eine erste Richtung erstreckt, einen zweiten Oberflächenabschnitt, der an dem zweiten Wandsegment angebracht ist und sich in eine zweite Richtung erstreckt, und ein Zwischenabschnitt mit einem sich quer zu der ersten Richtung und quer zu der zweiten Richtung erstreckenden Zwischenoberflächenabschnitt umfasst, wobei das Verbindungselements hierdurch T-förmig ausgebildet ist und auf eine entsprechende Wandung bzw. zwei aneinander stoßende Wandung aufgesetzt wird und mit Schraubbolzen, die durch die Wandung hindurch ragen, darauf befestigt wird.

Aus der DE 10 2013 002 469 A1 ist ein Stahlrohrturm einer Windenergieanlage bekannt, wobei diese Windenergieanlage einen Unterbauturm besitzen kann, wobei dieser Unterbauturm über tiefgezogene, in mehreren Ebenen verformte Flansche verfügt, die sowohl axial als auch radial Nut-und-Federverbindungen gewährleisten sollen. Zudem sind im Bereich des Unterbauturms zusätzliche Bleche eingeschweißt, die eine Doppelhüllenkonstruktion ergeben.

Aus der KR 10-1242505 ist ein Windenergieturm bekannt, bei dem Längsflansche miteinander verschraubt werden, wobei zwischen den Längsflanschen Abstandhaltebleche eingesetzt werden können.

Aus der DE 603 17 372 T2 sind groß bemessene Türme für Windkraftanlagen und Verfahren zum Erbauen derselben bekannt, wobei hierbei Längsflansche auf die Außenwandungen des Turms von innen aufgeschweißt und miteinander verbunden werden.

Aus der US 2012/0137620 A1 ist eine Anordnung eines Windenergieturms an einem Fundament bekannt, wobei ein T-förmiger Sockel des Turms von kreisringförmigen Haltesegmenten am Boden gehalten wird.

Aus der EP 2 282 051 A2 ist die Anordnung einer Windenergiegondel an einem Betonturm bekannt.

Aus der EP 2 388 479 A1 ist die Verbindung eines Unterbauturmadapters mit einem Turm einer Windenergieanlage bekannt.

Aus der EP 2 188 467 B1 ist ein Turm, insbesondere zum Stützen von Telekommunikationsgeräten, bekannt, wobei dieser Turm aus einer Mehrzahl von ebenen Blechen besteht, die nach außen weisende Flansche besitzen, welche mit Verstärkungsblechen ausgebildet sind.

Bei bekannten Unterbautürmen aus Beton ist von Nachteil, dass die Errichtung teuer und aufwendig ist und der Rückbau nach der Nutzungszeit aufwendig und teuer ist. WO 2009/097858 A1 offenbart ein Verfahren zum Errichten eines Rohrturmbauwerks gemäß der Präambel von Anspruch 1 und auch ein Rohrturmbauwerk gemäß der Präambel von Anspruch 9. WO 2010/055535 A1, US 7 464 512 B1, KR 2012 0073785 A und EP 1 561 883 A1 offenbaren weitere Rohrturmbauwerke.

Aufgabe der Erfindung ist es ein Verfahren zu schaffen, mit dem derartige Turmbauwerke kostengünstig, schnell und mit hoher Präzision und Passgenauigkeit errichtet werden können, welche besonders stabil sind und eine geringe Eigenfrequenz haben.

Diese Aufgabe wird mit einem Verfahren mit den Merkmalen des Anspruchs 1 gelöst.

Vorteilhafte Weiterbildungen sind in den hiervon abhängigen Unteransprüchen gekennzeichnet.

Es ist eine weitere Aufgabe ein Rohrturmbauwerk für Windenergieanlagen zu schaffen, der schneller errichtet werden kann. Diese Aufgabe wird mit einem Rohrturmbauwerk mit den Merkmalen des Anspruchs 9 gelöst.

Vorteilhafte Weiterbildungen sind in den hiervon abhängigen Unteransprüchen gekennzeichnet.

Ein erfindungsgemäßes Rohrturmbauwerk dient insbesondere als Unterbauturm, um einen herkömmlichen Turm zur Aufnahme von Windenergieanlagen aufzusetzen und hierdurch eine größere Höhe und damit bessere Winderreichbarkeit zu erzielen.

Für größere Höhen von derartigen Turmbauwerken ist es notwendig den Turmquerschnitt zu vergrößern, da nur dann die erforderliche Stand- und Knicksicherheit erzielt werden kann. Üblicherweise werden derartige Türme aus im Querschnitt kreisringförmigen Turmsegmenten erstellt, übereinander gesetzt und miteinander verbunden. Aufgrund der üblichen Brückenhöhe in Deutschland lassen sich sehr große Turmquerschnitte aus einteiligen Rohrabschnitten oder Rohrsegmenten nicht mehr realisieren.

Hierdurch ist es notwendig, um die Durchfahrthöhe einzuhalten, derartige, sehr breite Türme mit mehr als 4,5 m Durchmesser am Fuß aus Teilschalen, d.h. Ringsegmenten zu einem vollständigen Ring zusammenzusetzen und - so notwendig - mehrere dieser Ringe übereinanderzusetzen.

Grundsätzlich ist es bekannt, derartige sogenannte längsorientierte Schalen zu erstellen und diese Schalen am Einbauort zu einem Rohr zusammenzusetzen. Es hat sich hierbei jedoch herausgestellt, dass die Präzision so schlecht und die Toleranzen derart groß sind, dass die Montage sehr oft verzögert wird und unnötig erschwert wird. Zudem sind bekannte Schalenkonstruktionen nicht so stabil, dass sie für Rohrturmbauwerke großer Höhe geeignet wären.

Zudem ist es bekannt, längs orientierte Schalen zu erstellen, bei denen mehrfach umgeformte und insbesondere tiefgezogene Flansche, welche zum Turminneren gerichtet sind und im Wesentlichen axial verlaufen, vorhanden sind. Diese Flansche sollen sowohl in radialer Richtung einen Formschluss zwischen den längsorientierten Schalen nach Art eines Nut-und-Feder-Prinzips ergeben, einen solchen aber auch in axialer Richtung gewährleisten. Hierzu müssen die Bleche in mehreren Achsen verformt werden, was nur durch ein Tiefziehen ermöglicht wird. Hierbei konnte als nachteilig festgestellt werden, dass die erforderliche Präzision, um diese Türme überhaupt noch zusammensetzen zu können, nur dann erzielt wird, wenn relativ dünne Bleche verwendet werden. Um hier eine Stabilisierung herbeizuführen, werden diese längs orientierten Schalen als Doppelwandschalen ausgebildet, was jedoch einen erheblich höheren Konstruktionsaufwand zur Folge hat und zudem nach Nacharbeiten erfordert.

Erfindungsgemäß wird das Rohrturmbauwerk aus Rohrsegmenten gefertigt, welche aus längsorientierten Schalen hergestellt sind, so dass das Rohrturmbauwerk in Teillängen, die noch transportierbar sind oder, bei einer noch transportierbaren Länge, in seiner vollen Länge errichtet wird. Hierzu werden aus Stahlblech entsprechende Bahnen beziehungsweise Platinen gefertigt, welche dann in kleinen Abkantschritten zu den gewölbten Schalen verformt werden, so dass sie mit weiteren Schalen zusammengesetzt ein Rohrsegment bilden.

Diese längs orientierten Schalen sind somit aus einer Vielzahl von einzelnen zueinander abgekanteten Flächen ausgebildet. Beispielsweise besteht eine gewölbte Schale aus 5 bis 30, insbesondere 10 bis 20, zueinander abgekanteten Flächen, wobei die abgekanteten Flächen entsprechend der Schalenbreite und damit dem Teilumfang, den jede Schale bezüglich eines Rohrturmbauwerks darstellt, zwischen 1° und 8° und insbesondere zwischen 3° und 6° zueinander gewinkelt abgekantet sind.

Die verwendeten Materialstärken für die Schalen liegen zwischen 20 mm und 100 mm, insbesondere zwischen 40 mm und 100 mm.

Die Längs- bzw. Hochkanten der Schalen werden bezogen auf die Breite der Schale (bzw. den damit bewirkten Teilumfang eines Rohrsegments) mit einem Übermaß ausgebildet. Dieses Übermaß wird radial nach innen oder radial nach außen einfach, d. h. nicht mehrfach oder in sich verformt, abgekantet und bildet einen ebenen, geradlinigen Verbindungsflansch zur Verbindung mit benachbarten Schalen zur Erzeugung eines Rohrs oder Rohrsegments.

Der Kantwinkel des jeweiligen radial nach innen oder radial nach außen weisenden Flansches von dem jeweils direkt benachbarten abgekanteten ebenen Bereich der Schalenaußenwandung richtet sich selbstverständlich nach der Anzahl der Schalen, aus denen der gesamte kreisförmige Turmquerschnitt erstellt wird.

Radial bedeutet hierbei senkrecht auf dem Umfang des aus den Schalen zusammengesetzten Rohrkörpers.

Weitere Rohrsegmente können hierauf aufgesetzt und an horizontalen Kanten verschweißt werden, bis ein Rohrabschnitt oder ein vollständiges Rohrturmbauwerk ausgebildet ist. Alternativ kann eine Verbindung über horizontale Ringflansche erfolgen. In die abgekanteten Flansche werden die erforderlichen Löcher zum Durchstecken von Schraubbolzen und Verschrauben der Flansche benachbarter Schalen eingebracht, beispielsweise durch Bohren oder Brennen, insbesondere mit Laser.

Es hat sich herausgestellt, dass bei derart dicken Stahlplatten von 20 mm bis 100 mm, wie sie für Unterbautürme verwendet werden, eine Abkantung sehr präzise Verbindungen zulässt und sowohl durch das Abkanten an sich, aber auch durch das anschließende Erzeugen der Löcher die Verbindungen sehr wirtschaftlich erzeugt werden können. Insbesondere ergibt das Abkanten in kleinen Abkantwinkeln der Außenwand der Schalen sehr präzise Wölbungen mit einer hohen Eigensteifigkeit.

Zudem hat sich herausgestellt, dass eine Abkantung gerade bei Platten dieser Stärke (20 mm bis 100 mm) besonders spannungsarm und stabil ist, wobei durch die Kombination aus Plattenstärke und Abkantung die Schraubverbindungen nicht sehr eng toleriert sein müssen und keiner hochfesten Schrauben bedürfen.

An das Rohrsegment werden auf die jeweiligen Stirnkanten der Schalen Ringflanschsegmente stirnseitig angeschweißt, die als Adapter zu einem Fundament, weiteren Rohrsegmenten oder einem (konstruktiv bestehenden) Rohrturmbauwerk und insbesondere Windenergieanlagenturm dienen.

Durch das Aufschweißen der Ringflanschsegmente und die abgekanteten Flansche ergibt sich praktischerweise ein gewisser Abstand zwischen den horizontalen Ringflanschen und den vertikalen abgekanteten Flanschen, da die Ringflanschsegmente auf die Stirnkanten der abgekanteten Schalen aufgeschweißt werden müssen. Diese sich ergebenden und bei vollständig zusammengesetzten Türmen nach außen weisenden Öffnungen werden mit speziellen, hierfür angeformten Kunststoffelementen verschlossen.

Die Schalen werden anschließend zur Baustelle transportiert und dort entsprechend zu einem Rohrturmbauwerk zusammengestellt und durch die Flansche hindurch miteinander verbunden.

Beispielsweise wird ein Unterturm aus einer Mehrzahl von 7 m langen Rohrsegmenten ausgebildet, wobei diese Rohrsegmente jeweils aus einer Mehrzahl von 7 m langen entsprechenden Schalen bestehen.

Da übliche Windenergieturmbauwerke einen Fußdurchmesser von 4,3 m, die Unterbautürme aus Stabilitätsgründen jedoch Durchmesser bis 7 m und darüber hinaus haben, muss über die Höhe des Unterbauturmes eine Anpassung des Fußdurchmessers von 7 m auf einen Kopfdurchmesser von 4,3 m erreicht werden.

Dies kann einerseits dadurch erreicht werden, dass die einzelnen Rohrsegmente konisch verlaufen, d. h. eine Kegelstumpfform haben, so dass eine einheitliche Verjüngung des Unterbauturmes von beispielsweise 7 m auf beispielsweise 4,3 m erfolgt.

Erfindungsgemäß hat es sich jedoch herausgestellt, dass ein besonders stabiler Unterbauturm auch dann erreicht wird, wenn der Unterbauturm aus zylindrischen Rohrsegmenten mit einer Höhe von beispielsweise 7 m errichtet wird und kopfseitig dann ein letztes Adapterelement bzw. ein Adapterrohrsegment aufgesetzt wird, der sich von 7 m Fußdurchmesser auf 4,3 m Kopfdurchmesser verjüngt und insofern einen Kegelstumpf auf dem ansonsten zylindrischen Unterbaurohrturmbauwerk ergibt.

Erfindungsgemäß wird zwischen den Rohrsegmenten bzw. den horizontalen, L-förmigen Flanschen der Rohrsegmente ein Torsionsausgleichsring angeordnet. Der erfindungsgemäße Torsionsausgleichsring sorgt dafür, dass bei Torsionsbelastungen des Turmes der Kraftfluss von einem L-Flansch in den anderen durch die jeweiligen Schrauben optimal verläuft, indem alle L-Flansche der jeweiligen Schalen aktiviert werden und so eine Vergleichmäßigung stattfindet. Dies sorgt für die hervorragende Stabilität und geringe Eigenfrequenz des Turmes.

Bei der Erfindung ist von Vorteil, dass die Flansche und die Abkantung der Flansche mit der Rohrturmbauwerkswandung außerordentlich präzise und nachvollziehbar genau ist. Ferner ist von Vorteil, dass die Abkantung, Verschraubung, horizontale Schweißungen und das anschließende Trennen des Rohrturmbauwerks in die Schalenelemente unter nachvollziehbaren Bedingungen am Herstellort erfolgen kann, wobei eine entsprechende Nachprüfung am Herstellort erfolgen kann.

Es hat sich herausgestellt, dass das Schwingungsverhalten bzw. Eigenschwingungsverhalten erfindungsgemäßer Rohrturmbauwerke mit 0,215 Hz und darunter alle Erwartungen übertrifft und besonders gut gedämpft ist.

Zudem hat sich herausgestellt, dass sich bei der erfindungsgemäßen Methode, wonach die Flansche nach innen oder nach außen von den Schalen abgekantet werden, eine höhere Stabilität ergibt als bei Längsflanschen, die an die Längsstoßfläche angeschweißt werden.

Die Erfindung wird anhand einer Zeichnung beispielhaft erläutert. Es zeigen dabei:
- Figur 1:: eine isometrische, schematische Ansicht eines erfindungsgemäßen Rohrturmbauwerks;
- Figur 2:: eine Seitenansicht des Rohrturmbauwerks nach Fig. 1;
- Figur 3:: ein Querschnitt durch ein erfindungsgemäßes Rohrturmbauwerk mit gedreht angeordnetem Adapterelement, so dass die Flansche fluchtend dargestellt sind;
- Figur 4:: einen Schnitt B-B gemäß Fig. 3;
- Figur 5:: einen Schnitt G-G gemäß Fig. 3;
- Figur 6:: einen Schnitt C-C gemäß Fig. 3;
- Figur 7:: einen Schnitt F-F gemäß Fig. 6;
- Figur 8:: einen Schnitt E-E gemäß Fig. 9;
- Figur 9:: einen Schnitt D-D gemäß Fig. 6;
- Figur 10:: eine teilgeschnittene Ansicht im Stoßbereich zweier Rohrsegmente mit dem erfindungsgemäßen Torsionsausgleichsring;
- Figur 11:: einen Schnitt durch den Stoßbereich zwischen zwei Rohrsegmenten mit dem zwischen den L-Flanschen angeordneten Torsionsausgleichsring;
- Figur 12:: eine perspektivische Detailansicht der Anordnung von Torsionsausgleichsringsegmenten zwischen den L-Flanschen;
- Figur 13:: eine weitere Ausführungsform eines erfindungsgemäßen Rohrturmbauwerk aus einem unteren und einem oberen Rohrsegment mit Schalen und einer Türschale zusammengesetzt;
- Figur 14:: eine Teilschale aus einem unteren Rohrsegment eines Rohrturmbauwerks nach Fig. 13;
- Figur 15:: eine weitere Teilschale aus einem unteren Rohrsegment des Rohrturmbauwerks nach Fig. 13;
- Figur 16:: eine Teilschale aus einem oberen Rohrsegment des Rohrturmbauwerks nach Fig. 13;
- Figur 17:: eine Teilschale aus einem oberen Rohrsegment des Rohrturmbauwerks nach Fig. 13;
- Figur 18:: eine modular aufgebaute Türschale eines Rohrturmbauwerks nach Fig. 13;
- Figur 19:: die schmale Teilschale aus dem Fußbereich der Türschale;
- Figur 20:: eine weitere Teilschale aus der Türschale;
- Figur 21:: ein Adapterstück;
- Figur 22:: einen Torsionsring;
- Figur 23:: eine zusammengesetzte Schale eines unteren Rohrsegments;
- Figur 24:: eine zusammengesetzte Schale eines oberen Rohrsegments;
- Figur 25:: die schmale Teilschale der Türschale mit Flanschen;
- Figur 26:: die Türteilschale;
- Figur 27:: eine zusammengesetzte Schale.

Ein erfindungsgemäßes Rohrturmbauwerk 1 ist insbesondere ein Unterbauturm für bestehende Windenergieturmkonstruktionen und besitzt einen Kopfbereich 2, auf den ein weiteres Rohrturmbauwerk und insbesondere ein Windenergieturm aufgesetzt angeordnet werden kann.

Zudem besitzt das erfindungsgemäße Rohrturmbauwerk 1 einen Fußbereich 3, mit dem das Rohrturmbauwerk an einem Fundament angeordnet werden kann.

Die möglichen Durchmesser des Rohrturmbauwerkes im Fußbereich betragen 7 m bis 8 m, können jedoch auch deutlich darüber liegen.

Der Durchmesser des Rohrturmbauwerkes 1 im Kopfbereich 2 wird durch den Durchmesser eines aufzusetzendes Rohrturmbauwerkes, insbesondere Windenergieturms, bestimmt und liegt üblicherweise bei 4,3 m, kann gegebenenfalls aber auch darüber oder darunter liegen.

Das erfindungsgemäße Rohrturmbauwerk 1 ist hierbei aus zumindest einem Rohrsegment 4 oder aus einer Mehrzahl von axial aufeinanderfolgenden Rohrsegmenten 4 ausgebildet.

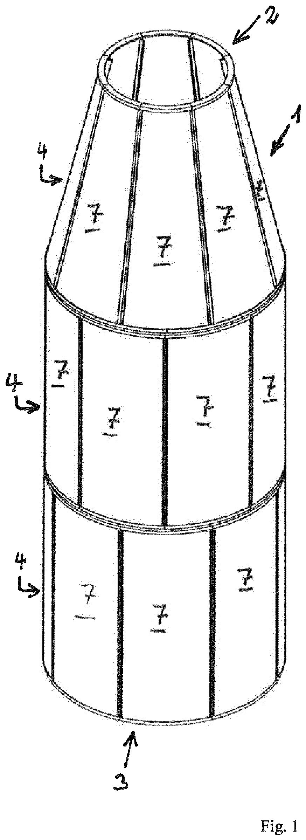

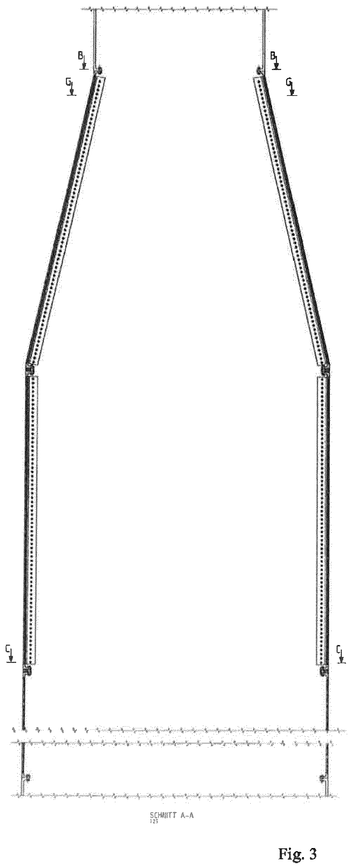

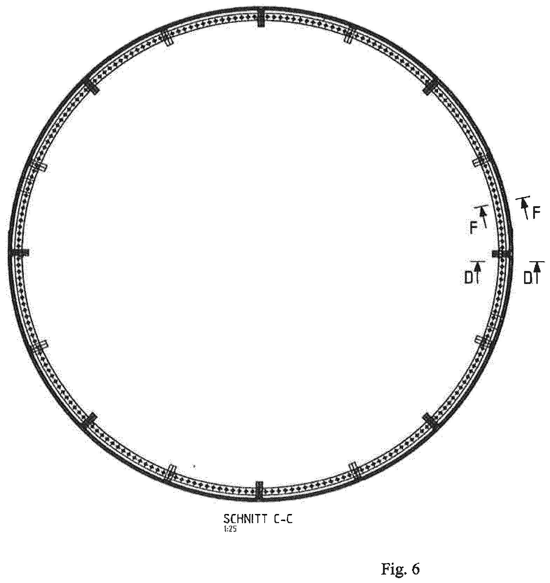

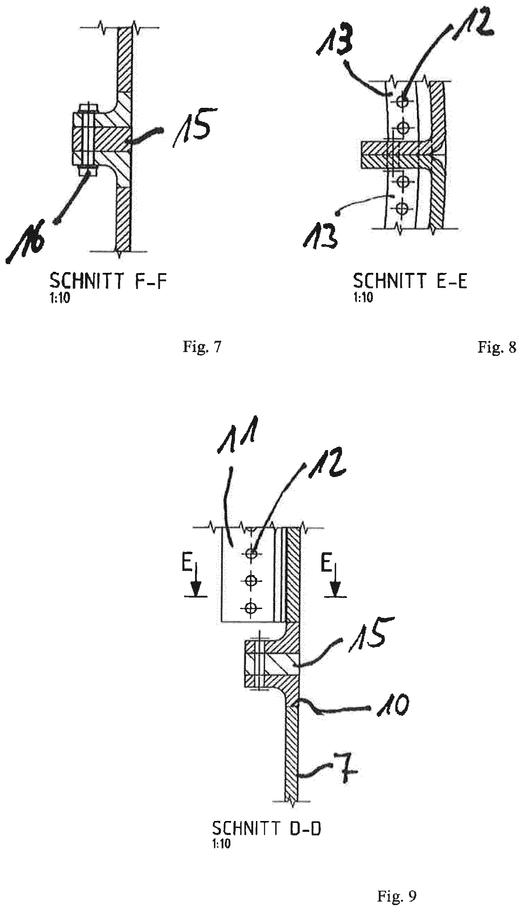

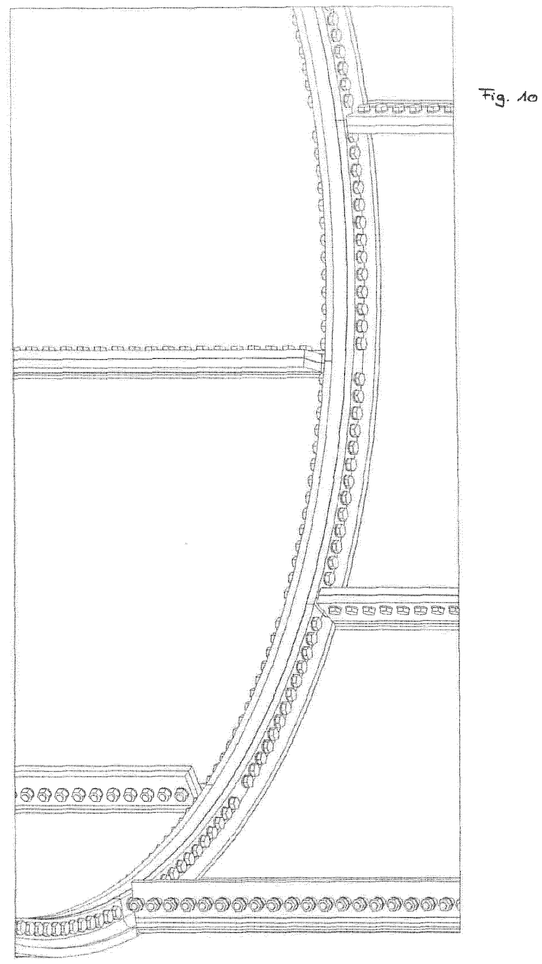

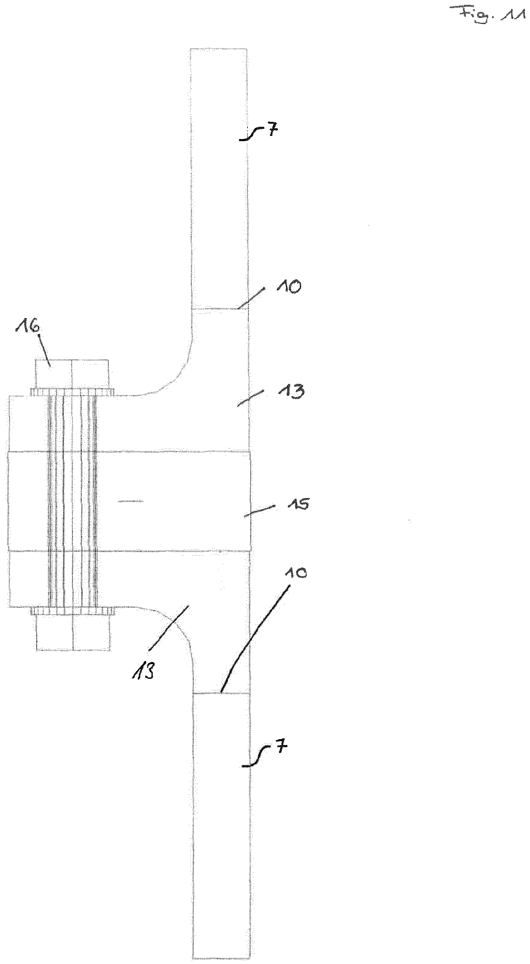

Bei einer Ausführungsform des Rohrturmbauwerks 1 (Figuren 1 bis 12) sind die Rohrsegmente 4 zylindrisch, rohrförmig ausgebildet und besitzen einen Durchmesser, der dem Durchmesser des Rohrturmbauwerkes 1 entspricht.

Bei dieser Ausführungsform des Rohrturmbauwerks 1 ist das oberste Rohrsegment 4 kegelstumpfförmig ausgebildet, wobei es sich von einem Rohrsegmentfußbereich 5 zu einem Rohrsegmentkopfbereich 6 vom Durchmesser des Fußbereichs 3 des Rohrturmbauwerks 1 zum Durchmesser im Kopfbereich 2 des Rohrturmbauwerks 1 verjüngt.

Dies bedeutet, dass das oberste Rohrsegment 4 als einziges der Rohrsegmente des Rohrturmbauwerks 1 kegelstumpfförmig ausgebildet ist, während die übrigen Rohrsegmente 4 zylindrisch ausgebildet sind.

Da die einzelnen Rohrsegmente 4 einen Durchmesser besitzen, der größer ist als ein Rohrdurchmesser, der logistisch noch zu verkraften, also transportabel, wäre (Brückenhöhe, Straßenbreite), sind die Rohrsegmente 4 zerlegbar bzw. zusammensetzbar ausgebildet. Hierzu ist jedes Rohrsegment 4 aus einer Mehrzahl von Schalen 7 ausgebildet.

Eine Schale 7 erstreckt sich über einen Teilumfang des Rohrsegments 4 und über die axiale Länge des Rohrsegments 4, so dass durch die Anordnung mehrerer Schalen 7 in Umfangsrichtung ein Rohrsegment 4 ausgebildet wird.

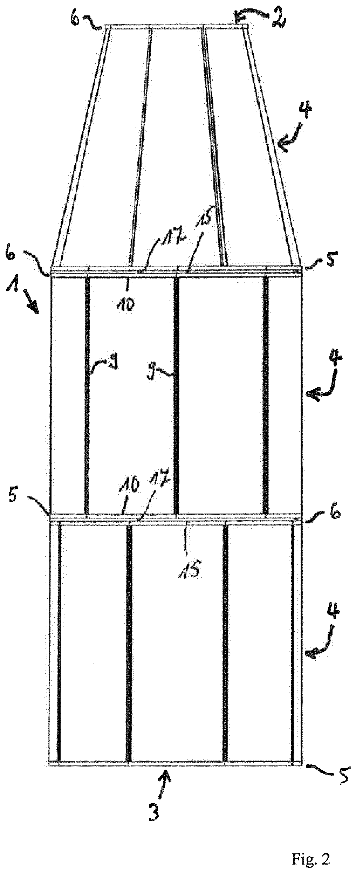

Die Schalen 7 sind somit im Querschnitt als Ringsegmente mit einer ringsegmentförmig gewölbten Mantelfläche 8 ausgebildet und besitzen hierdurch axial verlaufende Längskanten 9 und horizontal verlaufende Stirnkanten 10 (Fig. 2).

Die Mantelfläche 8 der Schalen 7 ist zur Erzielung einer Kreisringsegmentform nicht in diese Form gebogen, sondern mit einer Mehrzahl von Abkantschritten entsprechend abgekantet. Hierdurch ergibt sich eine Mehrzahl von ebenen Flächen 8a, welche entlang von Abkantungskanten 8b zueinander gewinkelt ausgebildet sind. Hierbei wird je nach Breite der Schale eine Anzahl von 5 bis 30 ebenen Flächen 8a angestrebt.

Letztlich wird somit die Anzahl der Flächen 8a und damit auch der Kanten 8b durch die Zahl der Schalen 7 einerseits und dem Umfang des Turmes andererseits bestimmt, da durch die Fläche 8a ein Kreisring angenähert werden soll.

Die Stabilität der Schalen, und damit des Turmes, und die geringe Eigenfrequenz des Turmes wird durch eine Mehrzahl von Flächen 8a und Kanten 8b positiv beeinflusst, so dass der gesamte Turm nicht nur aus einem Polygon mit beispielsweise zehn Ecken besteht, bzw. jede einzelne Schale nicht nur aus einem Polygon mit zwei oder drei Biegekanten besteht.

Die Breite der einzelnen Flächen 8a ist ebenfalls von der Breite der gesamten Schale 7 abhängig, wobei die einzelnen Flächen 8a jeweils mit einem Winkel zwischen 1° und 8°, insbesondere 3° und 6° zueinander gewinkelt ausgebildet sind. Der jeweilige Abkantwinkel der Flächen 8a zueinander hängt von der Anzahl der Flächen 8a und der Breite der Schale 7 und selbstverständlich der Anzahl der Schalen 7 und dem Turmumfang ab, da die Flächen den Gesamtumfang der Schale 7 unterteilen und damit die einzelnen Abkantwinkel einen entsprechenden Bruchteil des Gesamtwinkels des Umfangs der Schale 7 sind.

Von den Längskanten 9 erstrecken sich einstückig von der Mantelfläche 8 zum Rohrinneren bzw. Rohräußeren aus der Mantelfläche 8 nach innen oder nach außen abgekantete, radial verlaufende Längsflansche 11. Die Längsflansche 11 besitzen hierbei eine Mehrzahl von in Längsrichtung aufeinanderfolgende Bohrungen 12 oder Durchtrittsöffnungen 12 zum Verbinden der Längsflansche 11 benachbarter Schalen 7 miteinander.

Die Längsflansche sind mit einer jeweiligen axialen Stirnkante 11a jeweils ein Stück axial von den axialen Stirnkanten 10 der Schale 7 beabstandet, beispielsweise mit einer Stufe 11b.

Bedingt durch die Materialstärke und die starke Abkantung nach innen, besitzen die Längsflansche 11 zur Mantelfläche 8 der Schale 7 einen Abkantradius 11c.

Die Schalen 7 sind vorzugsweise aus Stahl ausgebildet und besitzen eine Dicke, die zur Verwendung als Unterbauturm für bestehende Windenergieturmkonstruktionen geeignet ist, von mehr als 26 mm, insbesondere mehr als 40 mm bis 100 mm.

Um eine Mehrzahl von Rohrsegmenten 4 aufeinander anordnen zu können, bzw. das unterste Rohrsegment 4 an einem Fundament anzuordnen, besitzen die jeweiligen Schalen 7 der Rohrsegmente 4 entlang ihrer Stirnkanten 10 auf Stoß aufgesetzte und insbesondere aufgeschweißte, im Querschnitt L-förmige Horizontalflansche 13. Hierdurch wird je ein in montiertem Zustand unterer Schalenfuß 30 und ein in montiertem Zustand oberer Schalenkopf 31 gebildet.

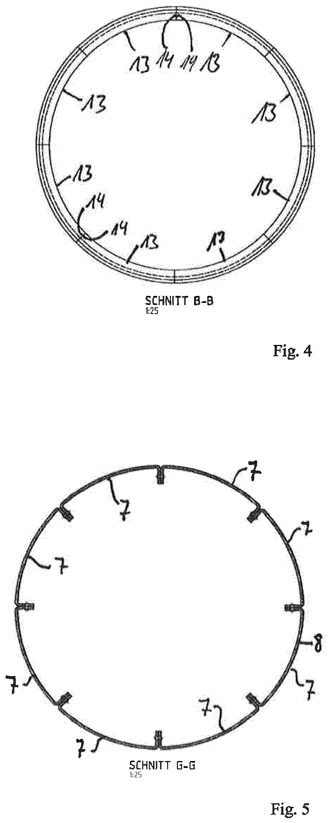

Die Horizontalflansche 13 bilden selbst je ein entsprechendes Ringsegment einer Länge, die der Breite einer Schale 7 über ihre Mantelfläche 8 inklusive der Stärke der Längsflansche 11 entspricht. Dies verursacht, dass die Horizontalflansche 13 der jeweiligen Schalen 7 nach dem Zusammensetzen des Rohrsegments 4 einen geschlossenen Ring bilden, wobei die Stoßkanten 14 der Horizontalflansche 13 aneinanderstoßen (Fig. 4).

Um ein Rohrsegment 4 auszubilden, wird dementsprechend eine Mehrzahl von Schalen 7, z. B. acht Schalen 7, mit einer gegebenen Breite über ihre Mantelfläche 8 und den entsprechenden Längsflanschen 11 aneinander angeordnet, wobei die Bohrungen 12 von entsprechenden Verbindungsmitteln durchgriffen und die Flansche miteinander verbunden werden.

Dementsprechend bilden die Horizontalflansche 13 der miteinander verbundenen Schalen einen Flanschring aus den Horizontalflanschen 13.

Um zwei Rohrsegmente 4 aneinander anzuordnen werden die Rohrsegmente 4 mit ihren Horizontalflanschen 13 und Bohrungen 12 in den Horizontalflanschen 13 fluchtend übereinandergesetzt.

Erfindungsgemäß wurde herausgefunden, dass das direkte Aufeinandersetzen der Horizontalflansche 13 dazu führt, dass Torsionsspannungen innerhalb des Rohrturmbauwerks 1 nicht zuverlässig übertragen werden und der Kraftfluss an vielen Stellen nicht optimal ist oder unterbrochen wird.

Erfindungsgemäß wurde erkannt, dass die Anordnung eines Torsionsringes 15 zwischen den Flanschringen aus den Horizontalflanschen 13 zu einer Aktivierung aller einzelnen Horizontalflansche 13 und zu einem gleichmäßigen Lasteintrag in die entsprechenden Schraubbolzen 16 führt. Dies führt dazu, dass das erfindungsgemäße Rohrturmbauwerk eine besonders niedrige Eigenfrequenz und hohe Stabilität besitzt.

Der Torsionsring 15 ist ein Ring mit einem Außendurchmesser, der dem Außendurchmesser des Flanschringes aus den Horizontalflanschen 13 in etwa entspricht, und mit einem Innendurchmesser, der ebenfalls dem Innendurchmesser des Flanschringes aus den Horizontalflanschen 13 in etwa entspricht.

Der Torsionsring 15 besitzt hierbei eine Dicke, die etwa ein Drittel bis zwei Drittel seiner Breite, d. h. des Unterschieds zwischen Innen- und Außendurchmesser entspricht, wobei der Dickenwert jedoch im Wesentlichen von statischen Berechnungen abhängt und auch hiervon abweichen kann.

Der Torsionsring 15 kann hierbei abhängig vom Durchmesser des Rohrturmbauwerks 1 einstückig ausgebildet sein, bei großen Durchmessern des Rohrturmbauwerks 1 kann er auch mehrteilig ausgebildet sein.

Um eine besonders gute Lastverteilung zu erzielen werden die Trennlinien 17 des Torsionsrings 15 so angeordnet, dass sie gerade nicht im Bereich der Stoßkanten 14 der Horizontalflansche 13 liegen.

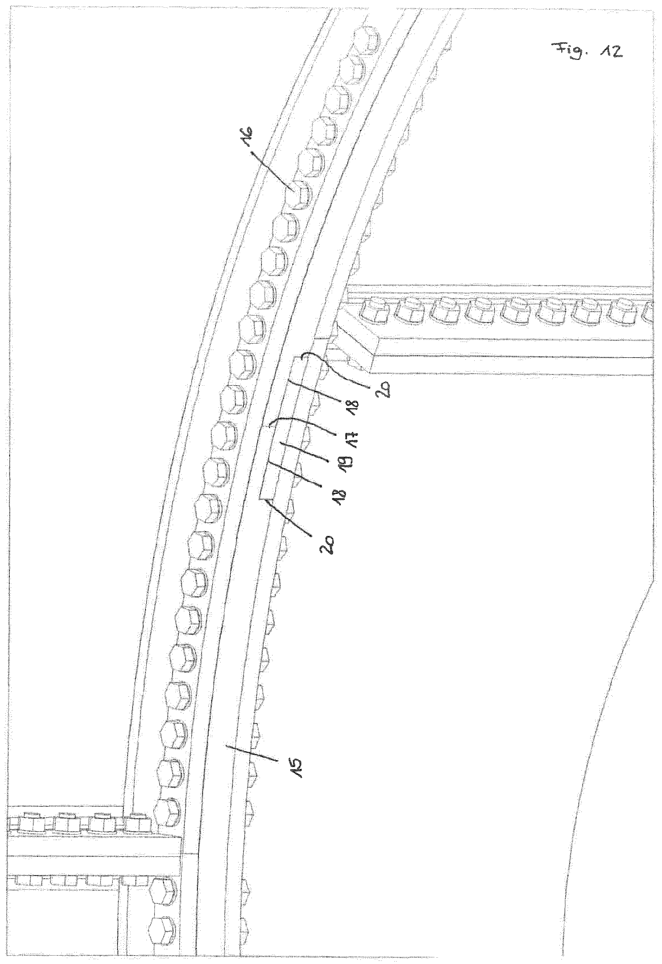

Zudem kann zum Erzielen einer besonders guten Lastverteilung und einer besonders guten Aktivierung der einzelnen Horizontalflansche 13 der Torsionsring im Bereich seiner Trennungen bezüglich der Dicke halbiert sein, so dass eine Stufe 18 entsteht (Fig. 12), so dass der Torsionsring 15 oder entsprechende Torsionsringsegmente 15 in diesem Bereich z. B. halbverjüngt ausgebildet sind. Um die Stoßkante 14 bzw. die Trennlinie 17 zu überbrücken kann dementsprechend ein entsprechendes Überbrückungselement 19 vorhanden sein, welches die eine zentrale Trennlinie 17 überbrückt und zwei von der Trennlinie 17 beabstandete Trennlinien 20 erzeugt (Fig. 12). Dementsprechend sind auch im Überbrückungselement die entsprechenden Bohrungen für Schraubbolzen 16 vorhanden.

Der Torsionsring 15 kann aus einer Mehrzahl von Torsionsringsegmenten ausgebildet sein, wobei die Anzahl der Torsionsringsegmente der Anzahl der Schalen 7 entsprechen kann, aber auch höher oder geringer sein kann. Wesentlich ist, dass die Längskanten 9 der Schalen 7 sowie die Stoßkanten 14 der Horizontalflansche 13 einerseits und die Trennlinien 17 der Torsionsringsegmente andererseits versetzt zueinander, d. h. nicht fluchtend, angeordnet sind.

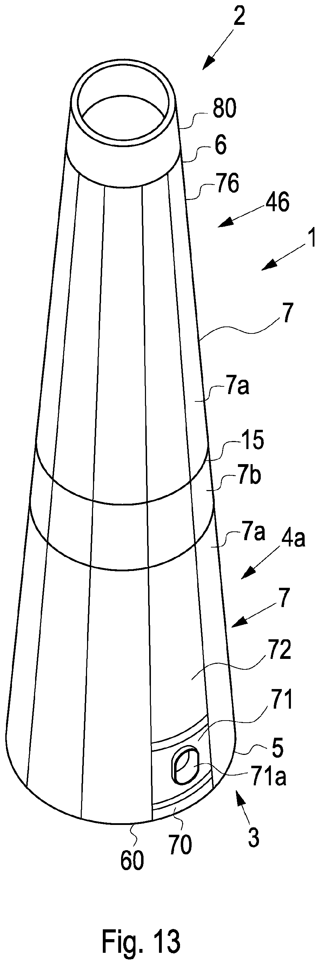

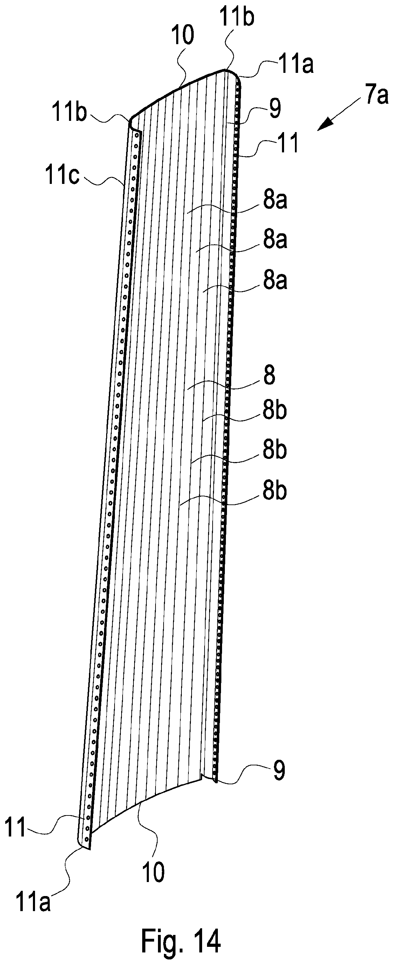

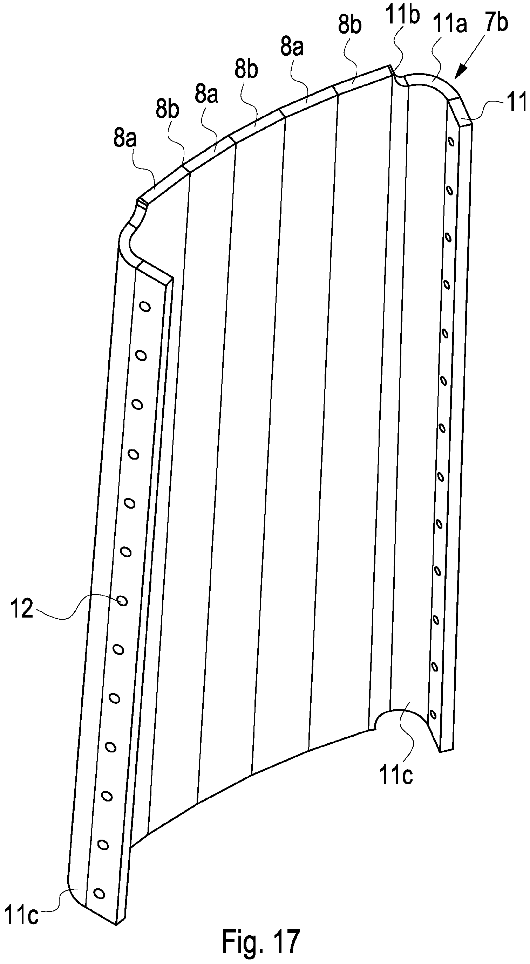

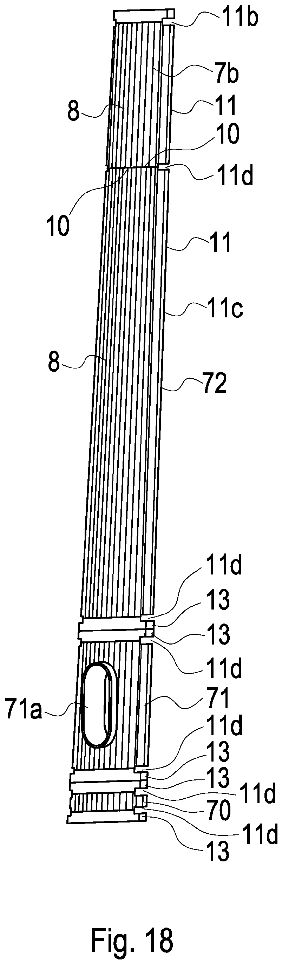

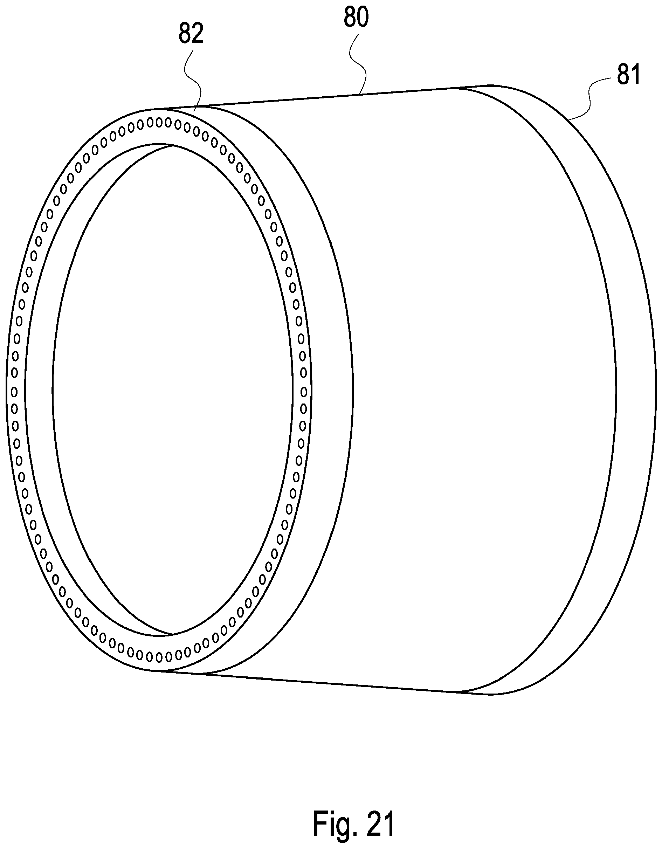

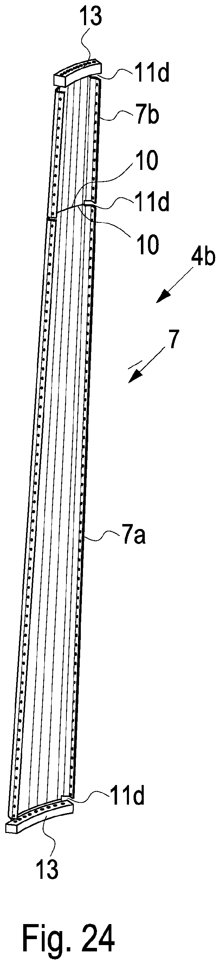

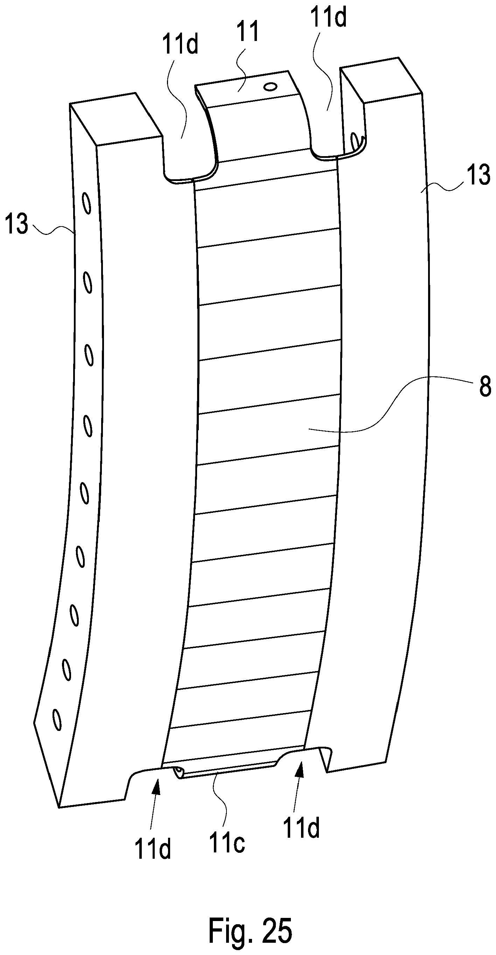

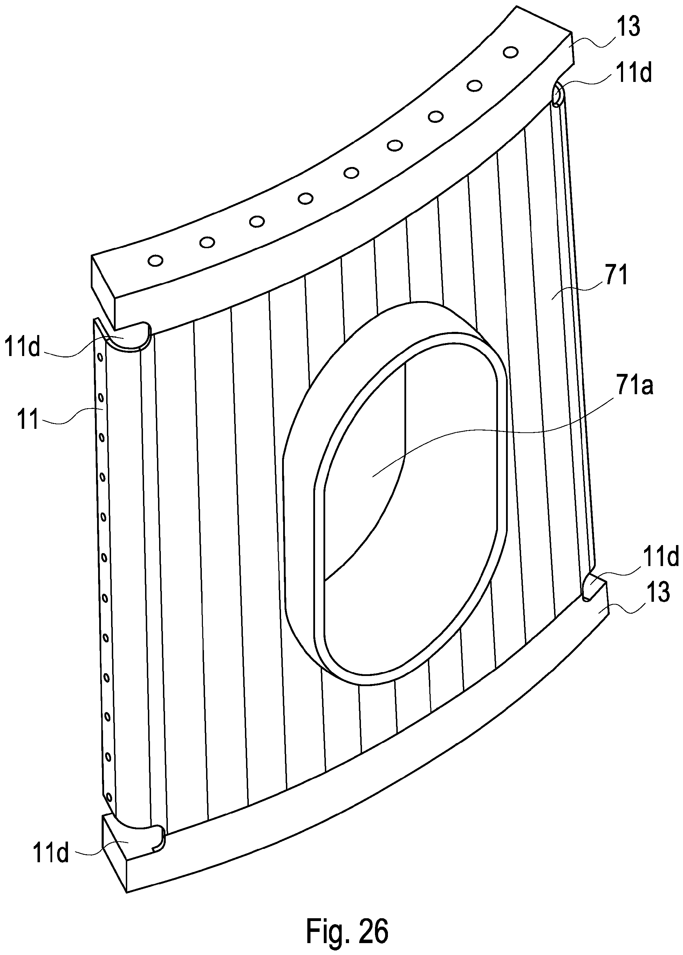

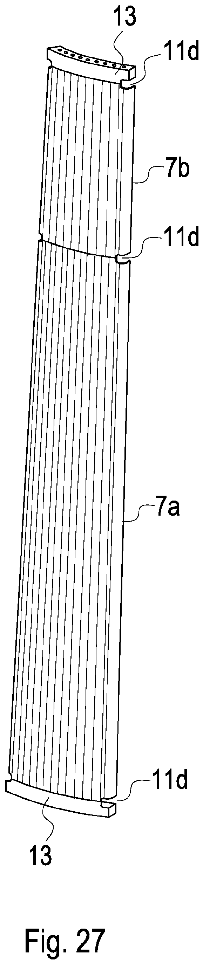

Bei einer weiteren vorteilhaften Ausführungsform ist das Rohrturmbauwerk insgesamt im Wesentlichen konisch ausgebildet (Figuren 13 bis 27). Bei einem sich vom Fußbereich 3 zum Kopfbereich 2 stetig verjüngenden und somit konischen Rohrturmbauwerk 1 sind dementsprechend auch die einzelnen Rohrsegmente 4 konisch ausgebildet, so dass sich deren Durchmesser von einem Rohrsegmentfußbereich 5 zu einem Rohrsegmentkopfbereich 6 verringert, so dass jedes Rohrsegment 4 einen Kegelstumpf ausbildet. Dementsprechend sind die Schalen 7 dann als Kegelstumpfsegmente ausgebildet.

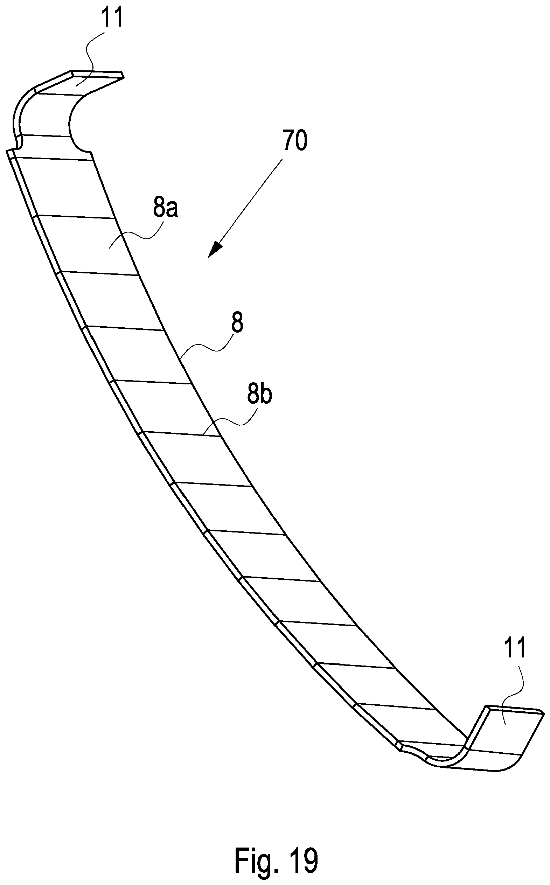

Dementsprechend sind die Schalen 7 auch in einem Fußbereich 30 breiter und in einem Kopfbereich 31 schmaler, so dass die Mantelflächen 8 konische Rohrsegmente 4 und einen insgesamt konischen Turm (Fig. 19) ergeben.

Hierbei kann das Rohrturmbauwerk bzw. können unterschiedliche Rohrsegmente 4a, 4b des Rohrturmbauwerks aus unterschiedlich ausgebildeten Teilschalen 7a, 7b, 70, 71, 72 ausgebildet sein.

Hierbei sind bei diesem Rohrturmbauwerk 1 die Schalen 7 der Rohrsegmente 4a, die in einem Fußbereich 3 des Rohrturmbauwerks verbaut werden, unterschiedlich zu den Schalen 7, die im Bereich eines oberen Rohrsegments 4b verbaut werden, ausgebildet.

Die Rohrsegmente 4a, 4b können dabei je aus sich über die axiale Länge erstreckenden Schalen 7 oder z. B. zwei axial aneinander angrenzenden Teilschalen 7a, 7b ausgebildet sein, wobei die Teilschalen 7a, 7b entlang gemeinsamer aneinander anliegender Stirnkanten 10 miteinander verschweißt sind.

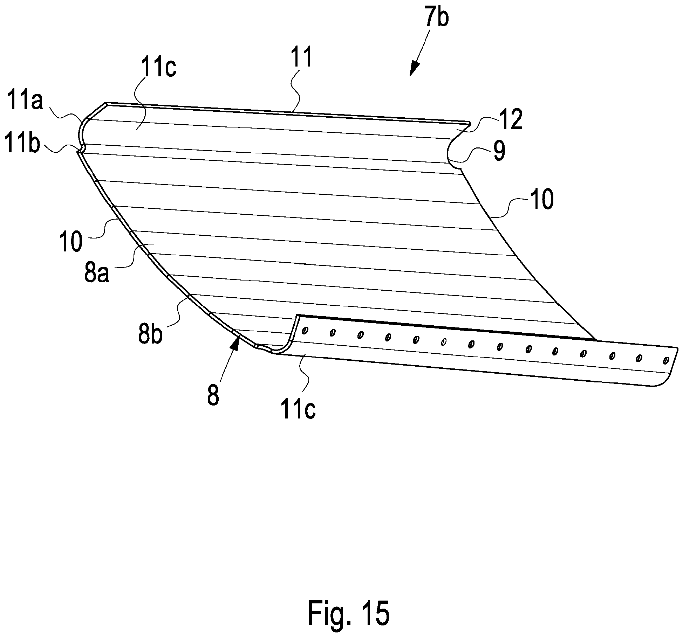

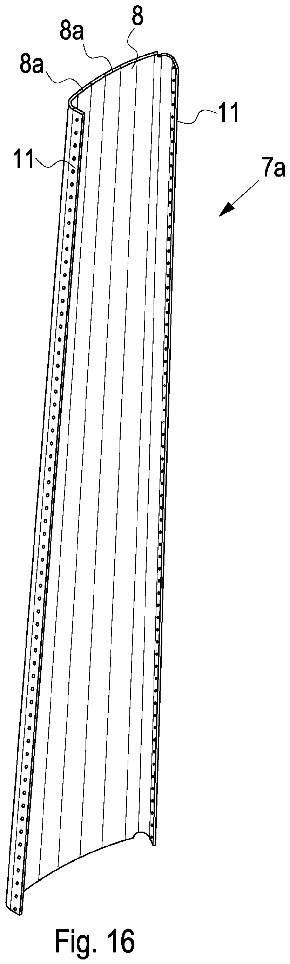

Die Teilschalen 7a, 7b, die in einem oberen Rohrsegment 4b verbaut werden (Figuren 15, 16), sind durch die Verjüngung des Turmes insgesamt schmaler, so dass sich die Teilschalen 7a, 7b des unteren Rohrsegments 4a von denen des Rohrsegments 4b auch durch die Anzahl der ebenen, zueinander abgekanteten Flächen 8a bzw. deren Abkantungskanten 8b unterscheiden.

Im Bereich des unteren Rohrsegments 4a haben die Teilschalen 7a, 7b beispielsweise zehn abgekantete, ebene Flächen 8a, während im Bereich des oberen Rohrsegments 4b beispielsweise nur fünf bis sechs Flächen 8a vorhanden sind.

Wie bereits ausgeführt, sind die Teilschalen 7a, 7b eines jeweiligen Rohrsegments direkt miteinander verschweißt und nicht über Flansche miteinander verbunden.

Gleichwohl können auch diese Teilschalen 7a, 7b über Flansche miteinander verbunden sein (nicht gezeigt).

Zwischen diesen Flanschen können dann auch dementsprechend Torsionsringe 15 (nicht gezeigt) angeordnet sein.

Erfindungsgemäß wird ein dementsprechendes Rohrturmbauwerk 1 insbesondere als Unterbauturm für bestehende Windenergieanlagenkonstruktionen modular aufgebaut, wobei im Fußbereich 3 das Bauwerk mit einem Flanschring 60 an einem Fundament angeordnet wird, von dem aus sich die entsprechenden Teilschalen 7a, 7b, entsprechend entlang ihrer Längsflansche 11 verschraubt, bis zu einem Torsionsring 15 axial erstrecken. Die Teilschalen 7a, 7b ergeben somit eine Schale 7.

In einem Bereich, in dem eine Tür im Unterbau vorzusehen ist, wird eine modulare Konstruktion vorgenommen, wobei eine Schale 7 in diesem Bereich modular aus einem ersten schmalen Teilschalenabschnitt 70 ausgebildet wird, auf welchen ein Türabschnitt 71 axial aufgesetzt ist, wobei der Türabschnitt 71 im Wesentlichen dem Querschnitt einer Schale 7 besitzt, jedoch eine Türöffnung 71a vorgesehen ist.

Axial hieran anschließend ist eine Teilschale 72 angeordnet, wobei sich die Teilschale 72 axial um die Länge einer Teilschale 7a, vermindert um die Höhe des Abschnitts 70 und des Türabschnitts 71 erstreckt, und sich gegebenenfalls eine Teilschale 7b axial anschließt.

Der schmale Teilschalenabschnitt 70, welcher den Türabschnitt 71 von dem Fußbereich 3 bzw. dem Anschluss an ein Fundament beabstandet, besitzt eine Höhe, die in etwa der Innenhöhe eines in den Turm eingebrachten Bodens und/oder einer Anschüttung von außen beträgt, so dass die Tür bzw. der Türabschnitt 71 bei der Errichtung des Turmes zunächst weggelassen werden kann und ein Betreten des Turminneren zu ebener Erde mit einem erheblich größeren Eingangsquerschnitt ermöglicht wird, so dass große Einbauten (Aufzug, etc.) eingebracht werden können.

Durch die geschraubte und mit ebenen, geraden Flanschen versehene Konstruktion kann ein Türabschnitt 71 jederzeit herausgenommen oder eingesetzt werden.

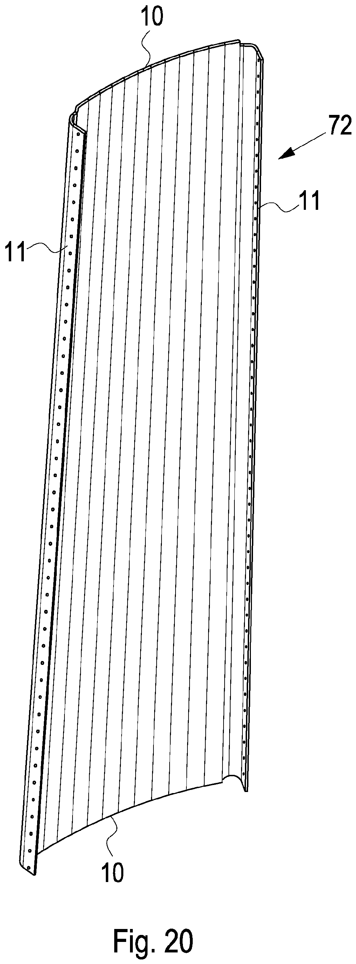

Auf das untere Rohrsegment 4a und das obere Rohrsegment 4b ist gegebenenfalls ein nicht aus Schalen sondern als Schweißkonstruktion ausgebildeter Kegelstumpf 80 (Fig. 20) aufgesetzt, der über einen fußseitigen Flansch 81 und einen kopfseitigen Flansch 82 verfügt, wobei der fußseitige Flansch 81 gegebenenfalls über einen Torsionsring mit einem kopfseitigen Flansch des zweiten Rohrsegments 4b ausgebildet ist und eine herkömmliche Windenergieturmkonstruktion gegebenenfalls über einen weiteren Torsionsring (nicht gezeigt) mit dem kopfseitigen Flansch 82 verschraubbar ist.

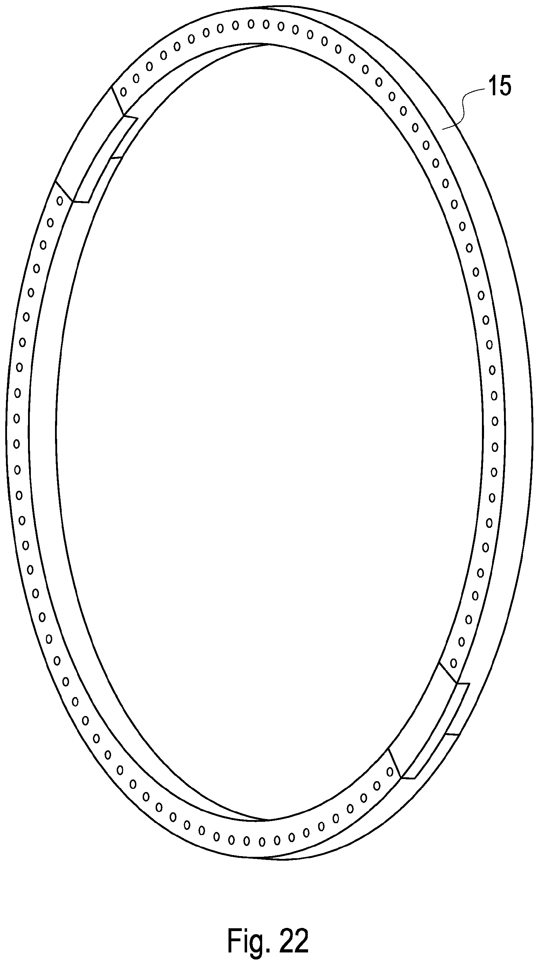

Eine vollständige Schale 7 eines ersten Rohrsegments (Fig. 22) besitzt einen in bereits beschriebener Weise an eine untere Teilschale 7a angeschweißten Horizontalflansch 13 und einen an die obere Teilschale 7b stirnseitig angeschweißten Horizontalflansch 13. Die obere Teilschale 7b ist mit einer unteren horizontal verlaufenden Kante fluchtend mit einer oberen horizontal verlaufenden Kante 10 der unteren Teilschale 7a auf Stoß verschweißt. Da die Längsflansche 11 von den Horizontalkanten 10, wie bereits ausgeführt, axial mit einer Stufe 11b etwas zurückgesetzt sind, entstehen in diesen Bereichen und im Bereich der Horizontalflansche 13 Freiräume 11d, welche nach Fertigstellung der Konstruktion durch Kunststoffelemente (nicht gezeigt) verschlossen werden.

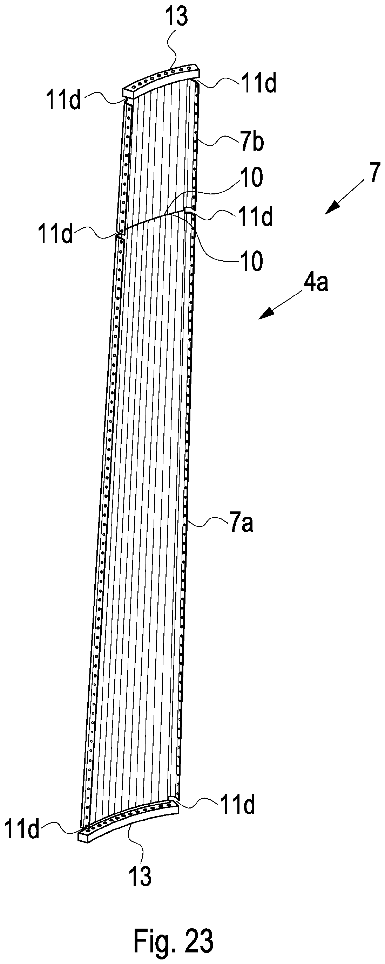

In gleicher Weise (gleiche Teile sind mit gleichen Bezugszeichen versehen) sind die Schalen 7 des oberen Rohrsegments 4b ausgebildet (Fig. 23).

Die Zahl der axial aufeinanderfolgenden Rohrsegmente 4 ist dabei von der geplanten Höhe des Unterbauturmes und von der axialen Länge der Rohrsegmente abhängig. Somit ist die Zahl nicht auf zwei Rohrsegmente festgelegt, sondern kann von lediglich einem Rohrsegment bis zu einer Vielzahl von Rohrsegmenten reichen, wobei die Konizität des oder der einzelnen Segmente an die Gesamtkonizität des Unterbauturmes anzupassen ist und somit auch der jeweilige Kopf- und Fußdurchmesser.

Ebenso ist die Zahl der Teilschalen nicht auf zwei festgelegt, ebensowenig wie das axiale Längenverhältnis der Teilschalen zueinander. Es kann sich um eine einstückige Schale handeln oder eine Schale, die aus einer Vielzahl von axial aufeinanderfolgenden Teilschalen ausgebildet ist.

Bei der Erfindung ist von Vorteil, dass ein Rohrturmbauwerk 1 aus Rohrabschnitten 4, welche zylindrisch und/oder konisch sind, vollständig in einer entsprechenden Fabrikationseinrichtung hergestellt wird. Unter vorbestimmten Bedingungen, welche geringste Toleranzen zulassen, werden Flansche, welche sich längs beziehungsweise axial erstrecken, nach außen oder nach innen von der Mantelfläche abgekantet und das Rohrturmbauwerk hierdurch durch zumindest zwei Teilschalen, vorzugsweise mehrere Teilschalen, insbesondere vier bis vierzehn Teilschalen, untergliedert, welche gut, auch auf Straßen, zu transportieren sind.

An einer Errichtungsstelle des Rohrturmbauwerks werden die Teilschalen (wieder) miteinander verbunden, wobei dies in besonders einfacher Weise geschieht, da die Teilschalen absolut passgenau aufeinander abgestimmt sind. Im Gegensatz zu herkömmlichen Errichtungskonzepten, bei denen ein solches Rohrturmwerk aus einzelnen fertig geschweißten Rohrsegmenten zusammengestellt und verschweißt wird, kann die Montage eines solchen großen Rohrturmbauwerks in einem Bruchteil der Montagezeit geschehen, wobei zusätzlich ein Rohrturmbauwerk mit sehr großem Durchmesser, insbesondere Durchmessern am Fuß > 7 m, realisiert werden kann. Zudem machen die ebenen, geradlinigen Flansche die Montage einfach.

Insbesondere ist von Vorteil, dass mit einem solchen Rohrturmbauwerk in einfacher, kostengünstiger und schnell zu montierender Weise ein sehr hoher Unterbau für bekannte Rohrtürme, welche Windenergieanlagen tragen, erstellt werden kann, so dass übliche Windenergieanlagen höher in den Wind gebracht werden können und damit die Effektivität gesteigert werden kann.

Es ist darüber hinaus von Vorteil, dass die Kombination von relativ dicken, durch Abkanten gewölbten Stahlblechen einerseits, abgekanteten Flanschen andererseits und Flanschverbindungen mit einem Torsionsring ein Rohrturmbauwerk 1 mit einer sehr geringen Eigenfrequenz ergibt, welches in hervorragender Weise die durch ein aufgesetztes Rohrturmbauwerk eingetragenen Lasten ableitet. Bei dem erfindungsgemäßen Torsionsring 15 zwischen den Horizontalflanschen 13 ist von Vorteil, dass hierdurch eine ideale Aktivierung aller Horizontalflansche 13 aller Schalen 7 und insbesondere aller Bolzen 16 gelingt.

Die Verbindung sowohl der Längsflansche als auch der Horizontalflansche kann hierbei mit Schrauben bzw. Schraubbolzen, Nieten, Schrauben mit Presshülsen oder Schließringbolzen erfolgen.

Vorteilhafterweise kann die Anzahl der Schalen 7 abhängig vom Durchmesser des Rohrturmbauwerks zwischen zwei und vierzehn Schalen oder auch darüber liegen, wobei Fußdurchmesser von 4 m bis 14 m und Kopfdurchmesser von 2,5 m bis 10 m ohne weiteres realisierbar sind.

Auch die Höhe eines erfindungsgemäßen Rohrturmbauwerks 1 kann von der erforderlichen bzw. gewünschten Nabenhöhe des gesamten Rohrturmbauwerks, d. h. inklusive eines aufgesetzten Windenergieturms, variieren, wobei üblicherweise Höhen des erfindungsgemäßen Rohrturmbauwerks 1 von 7 m bis 30 m üblich sind, aber auch Höhen darüber kein Problem darstellen. Bei einer geringen Höhe, beispielsweise von 7 m, wird ein einzelnes, in diesem Fall konisches oder kegelstumpfförmiges Rohrsegment verwendet.

Die Kombination aus abgekanteten Mantelflächen, abgekanteten Längsflanschen, der Blechstärke, der Horizontalflansche und des zwischen den Horizontalflanschen angeordneten Torsionsringes ergibt insgesamt die hohe Stabilität des erfindungsgemäßen Rohrturmbauwerks.

Bei dem erfindungsgemäßen Rohrturmbauwerk ist im Gegensatz zu Betonunterbautürmen zudem von Vorteil, dass es erheblich günstiger als Betontürme ist und in besonders guter Weise rückbaufähig ist, wenn die geplante Nutzungszeit abgelaufen ist.

### Bezugszeichenliste:

- 1: Rohrturmbauwerk
- 2: Kopfbereich
- 3: Fußbereich
- 4: Rohrsegment
- 4a: unteres Rohrsegment
- 4b: oberes Rohrsegment
- 5: Rohrsegmentfußbereich
- 6: Rohrsegmentkopfbereich
- 7: Schale
- 7a: Teilschale
- 7b: Teilschale
- 8: Mantelfläche
- 8a: ebene Fläche
- 8b: Abkantungskante
- 9: Längskante
- 10: Stirnkante
- 11: Längsflansch
- 11a: Stirnkante
- 11b: Stufe
- 11c: Abkantradius
- 11d: Freiräume
- 12: Bohrung/Durchtrittsöffnung
- 13: Horizontalflansch
- 14: Stoßkante
- 15: Torsionsring
- 16: Schraubbolzen
- 17: Trennlinie
- 18: Stufe
- 19: Überbrückungselement
- 20: Trennlinie

- 30: Schalenfuß/Fußbereich
- 31: Schalenkopf/Kopfbereich

- 60: Flanschring
- 70: Teilschalenabschnitt
- 71: Türabschnitt
- 71a: Türöffnung
- 72: Teilschale
- 80: Kegelstumpf
- 81: fußseitiger Flansch
- 82: kopfseitiger Flansch

## Patentansprüche

1. Verfahren zum Errichten eines Rohrturmbauwerks, insbesondere eines Unterbauturmes für bestehende Windenergieturmkonstruktionen, wobei
- aus Stahlplatten im Querschnitt im Wesentlichen ringsegmentförmige Schalen (7) geformt werden, wobei
- von den Schalen (7) entlang geplanter axialer Verbindungslinien jeweils ein axialer Längsflansch (11) radial nach innen oder nach außen von der Schale (7) abgekantet wird, wobei
- zur Errichtung des Rohrturmbauwerks (1) die Schalen (7) mittels der Längsflansche (11) benachbarter Schalen (7) aneinander angeordnet werden und durch die Längsflansche (11) aneinander liegender Schalen (7) zu einem Rohrsegment (4) verbunden werden, wobei Bohrungen (12) benachbarter Längsflansche (11) von Verbindungsmitteln (16) durchgriffen werden, wobei
- die Formung der ringsegmentförmigen Wölbung der Schalen (7) durch eine Mehrzahl von Abkantungen entlang des Umfangs derart erfolgt, dass eine Vielzahl von in Umfangsrichtung aufeinanderfolgenden, zueinander gewinkelten Flächen (8a) gebildet werden, **dadurch gekennzeichnet, dass**
- zur Verbindung eines Rohrsegments (4) mit einem Fundament oder einem weiteren Rohrsegment (4) oder einem weiteren Rohrturmbauwerk in einem Rohrsegmentfußbereich (5) und/oder in einem Rohrsegmentkopfbereich (6) die Schalen (7) an horizontalen Stirnkanten (10) je einen Horizontalflansch (13) besitzen, welcher mindestens eine Stoßkante (14) aufweist,
wobei
die Flächen (8a) jeweils mit einem Winkel zwischen 1° und 8°, insbesondere 3° und 6°, zueinander gewinkelt abgekantet ausgebildet werden,
wobei
die Stahlplatten zur Erzeugung der Schalen (7) eine Dicke von 20 mm bis 100 mm, insbesondere 40 mm bis 100 mm besitzen.

2. Verfahren nach Anspruch 1, **dadurch gekennzeichnet, dass** die Schalen (7) aus einer Mehrzahl von axial aneinander anliegenden und axial aufeinanderfolgenden, miteinander verschweißten Teilschalen (7a, 7b) ausgebildet sind, wobei die Horizontalflansche (13) der Schalen (7) mit Verbindungsstücken zu einem Ring miteinander verbunden werden.

3. Verfahren nach einem der vorhergehenden Ansprüche, **dadurch gekennzeichnet, dass** zur Bildung eines Rohrsegments (4) vier bis sechzehn Schalen (7), mit einer gegebenen Breite über ihre Mantelfläche (8) und den entsprechenden Längsflanschen (11) aneinander angeordnet wird, wobei zur Anordnung mehrerer Rohrsegmente (4) aneinander die Horizontalflansche (13) bzw. aus den Flanschen (13) gebildete Flanschringe mit ihren Bohrungen fluchtend aneinander angeordnet werden, wobei zwischen den Horizontalflanschen (13) zur Verbesserung des Lasteintrags in die Verbindungsmittel (16) ein Torsionsring (15) eingesetzt wird, der die Horizontalflansche (13) voneinander beabstandet und der Torsionsring (15) ein Ring mit einem Außendurchmesser ist, der dem Außendurchmesser des Flanschringes aus den Horizontalflanschen (13) in etwa entspricht, und mit einem Innendurchmesser ausgebildet ist, der ebenfalls dem Innendurchmesser des Flanschringes aus den Horizontalflanschen (13) in etwa entspricht, wobei der Torsionsring (15) axiale Bohrungen besitzt, die den Bohrungen in den Flanschringen entsprechen.

4. Verfahren nach Anspruch 3, **dadurch gekennzeichnet, dass** der Torsionsring eine Dicke besitzt, die etwa ein Drittel bis zwei Drittel seiner Breite entspricht, wobei der Torsionsring (15) einstückig oder segmentiert ausgebildet ist und der Torsionsring (15) bei segmentierter Ausbildung so angeordnet wird, dass die Stoßkante bzw. Trennlinie (17) des Torsionsrings (15) zu den Stoßkanten (14) der Horizontalflansche (13) versetzt angeordnet sind.

5. Verfahren nach einem der vorhergehenden Ansprüche, **dadurch gekennzeichnet, dass** die Flanschpaare bzw. die Flansche aneinander anliegender Schalen (7) mit Schraubbolzen, Nieten, Schrauben mit Presshülsen oder Schließringbolzen verbunden werden.

6. Verfahren nach einem der vorhergehenden Ansprüche, **dadurch gekennzeichnet, dass** das Rohrturmbauwerk (1) an einem axialen Ende einen ersten Durchmesser aufweist und einem axial gegenüberliegenden Ende einen zweiten Durchmesser aufweist, wobei der erste Durchmesser größer als der zweite Durchmesser ist, so dass das Rohrturmbauwerk (1) konisch aufgebaut ist, wobei ein Turm einer Windenergieanlage auf den Bereich mit dem geringeren Durchmesser des Rohrturmbauwerks aufsetzbar und befestigbar ist und einen Fußdurchmesser von 4 m bis 14 m und einen Kopfdurchmesser von 2,5 m bis 10 m besitzt und das Rohrturmbauwerk (1) aus zumindest einem zylindrischen Rohrsegment (4) und einem darauf aufgesetzten zylinderstumpfförmigen Rohrsegment (4) ausgebildet wird und das Rohrturmbauwerk (1) aus zumindest einem konischen Rohrsegment (4) ausgebildet wird.

7. Verfahren nach einem der vorhergehenden Ansprüche, **dadurch gekennzeichnet, dass** eine Mehrzahl von ebenen Flächen (8a) mittels einer Mehrzahl von Abkantschritten gebildet wird, wobei abhängig von der Breite der Schale (7) eine Anzahl von 5 bis 30 ebenen Flächen (8a) ausgebildet wird, wobei der jeweilige Abkantwinkel der Flächen (8a) zueinander von der Anzahl der Flächen (8a) und der Breite der Schale (7) einerseits und der Anzahl der Schalen (7) und des Gesamtturmumfangs andererseits abhängt, wobei die Flächen (8a) den Umfangswinkel der Schale (7) unterteilen und damit die einzelnen Abkantwinkel einen entsprechenden Bruchteil des Gesamtwinkels des Umfangs der Schale (7) ausbilden.

8. Verfahren nach einem der vorhergehenden Ansprüche, **dadurch gekennzeichnet, dass** zum Einbau einer Tür in das Rohrturmbauwerk (1) eine Schale (7) in diesem Bereich modular aufgebaut wird, wobei die entsprechende Schale (7) einen Türabschnitt (71) besitzt, der axial zwischen Teilschalen (70, 72) eingesetzt ist, und der Türabschnitt (71) Längsflansche (11) besitzt, mit denen er an benachbarten Schalen (7) lösbar angeordnet wird, wobei der Türabschnitt (71) in seinem Fußbereich und in seinem Kopfbereich jeweils über einen Horizontalflansch (13) verfügt, der mit korrespondierenden Horizontalflanschen (13) axial vor- und nachgeordneter Teilschalen (70, 72) lösbar verbindbar ist.

9. Rohrturmbauwerk, errichtet mit einem Verfahren nach einem der Ansprüche 1 bis
8, wobei das Rohrturmbauwerk (1) zumindest ein Rohrsegment (4) besitzt, wobei das Rohrsegment (4) aus einer Mehrzahl von im Querschnitt ringsegmentförmigen Schalen (7) ausgebildet ist, wobei die Schalen (7) ringsegmentförmig ausgebildete Mantelflächen (8) besitzen und längsverlaufende bzw. axial verlaufende Längskanten (9) und horizontal verlaufende Stirnkanten (10) besitzen,
wobei sich von den Längskanten (9) einstückig von der der Mantelfläche (8) zum Inneren oder äußeren des Rohrturmbauwerks (1) aus der Mantelfläche (8) radial verlaufende und abgekantete Längsflansche (11) erstrecken, wobei die Mantelfläche (8) als Kreissegment aus einer Vielzahl von ebenen Flächen (8a) ausgebildet ist, die zueinander gewinkelt abgekantet ausgebildet sind und zusammen das Kreissegment bilden, wobei die Schalen (7) mit den Längsflanschen (11) aneinander anstoßend angeordnet sind, wobei Bohrungen (12) benachbarter Längsflansche (11) von Verbindungsmitteln (16) durchgriffen werden, **dadurch gekennzeichnet, dass** die Flächen (8a) jeweils mit
einem Winkel zwischen 1° und 8°, insbesondere 3° und 6°, zueinander gewinkelt abgekantet ausgebildet werden, wobei die Stahlplatten zur Erzeugung der Schalen (7) eine Dicke von 20 mm bis 100 mm, insbesondere 40 mm bis 100 mm besitzen,
und dass zur Verbindung einer Mehrzahl von Rohrsegmenten (4) und/oder zur Anordnung des untersten Rohrsegments (4) des Rohrturmbauwerks (1) an einem Fundament oder zur Anordnung eines Rohrturmbauwerks auf dem obersten Rohrsegment (4) die Schalen (7) der Rohrsegmente (4) entlang ihrer Stirnkanten (10) auf Stoß aufgesetzt und Horizontalflansche (13) besitzen, welche insbesondere aufgeschweißt, im Querschnitt L-förmig sind.

10. Rohrturmbauwerk, nach Anspruch 9, wobei die Horizontalflansche (13) der jeweiligen miteinander verbundenen Schalen (7) nach dem Zusammensetzen des Rohrsegments (4) aus den Schalen (7) einen geschlossenen Ring bilden.

11. Rohrturmbauwerk nach einem der Ansprüche 9 oder 10, **dadurch gekennzeichnet, dass** zur Verbindung von Rohrsegmenten (4) aneinander oder des obersten Rohrsegments (4) an einem darüber liegenden Rohrturmbauwerk die Rohrsegmente (4) mit ihren Flanschen (13) und den entsprechenden Bohrungen (12) fluchtend übereinander angeordnet werden, wobei die Horizontalflansche (13) durch einen Torsionsring (15) voneinander beabstandet sind, der zwischen den Flanschringen aus den Horizontalflanschen (13) angeordnet ist und mit den Bohrungen (12) fluchtende Bohrungen besitzt, so dass zur Verbindung der Flansche miteinander die Flansche und der Torsionsring miteinander verbunden werden.

12. Rohrturmbauwerk nach einem der Ansprüche 9 bis 11, **dadurch gekennzeichnet, dass** die Rohrsegmente (4) konisch und/oder zylindrisch ausgebildet sind, so dass die Schalen (7) zylindermantelsegmentartig oder kegelstumpfmantelsegmentartig ausgebildet sind, wobei das Rohrturmbauwerk (1) bzw. unterschiedliche Rohrsegmente (4a, 4b) des Rohrturmbauwerks (1) aus unterschiedlich ausgebildeten Teilschalen (7a, 7b, 70, 71, 72) ausgebildet sind, und die Schalen (7) der Rohrsegmente (4a), die in einem Fußbereich (3) des Rohrturmbauwerks (1) verbaut werden, sich von den Schalen (7) unterscheiden, die in Bereichen eines oberen Rohrsegments (4b) verbaut werden, wobei die Teilschalen (7a, 7b), die in einem oberen Rohrsegment (4b) verbaut werden, durch die Verjüngung des Rohrturmbauwerks (1) insgesamt schmaler ausgebildet sind, so dass sich die Teilschalen (7a, 7b) des unteren Rohrsegments (4a) von denen des oberen Rohrsegments (4b) auch durch die Anzahl der ebenen, zueinander abgekanteten Flächen (8a) bzw. deren Abkantungskanten (8b) unterscheiden, wobei im Bereich des unteren Rohrsegments (4a) die Teilschalen (7a, 7b) 10 bis 20 abgekantete, ebene Flächen (8a) aufweisen, während im Bereich des oberen Rohrsegments (4b) 3 bis 10 Flächen (8a), insbesondere 5 bis 6 Flächen (8a) vorhanden sind.

13. Rohrturmbauwerk nach einem der Ansprüche 9 bis 12, **dadurch gekennzeichnet, dass** die Rohrsegmente (4, 4a, 4b) aus den sich über die axiale Länge des Rohrsegments (4, 4a, 4b) erstreckenden Schalen (7) ausgebildet sind oder aus zwei oder mehreren axial aneinander angrenzenden Teilschalen (7a, 7b) ausgebildet sind, wobei die Teilschalen (7a, 7b) entlang aneinander anliegenden gemeinsamen Stirnkanten (10) miteinander verschweißt sind, wobei die vollständige Schale (7) eines ersten Rohrsegments (4a) einen an eine untere Teilschale (7a) angeschweißten Horizontalflansch (13) und einen an die obere Teilschale (7b) stirnseitig angeschweißten Horizontalflansch (13) besitzt, wobei die obere Teilschale (7b) mit einer unteren horizontal verlaufenden Kante fluchtend mit einer oberen horizontal verlaufenden Kante (10) der unteren Teilschale (7a) auf Stoß verschweißt ist und die Längsflansche (11) der Schalen (7) von den horizontalen Kanten (10) axial etwas zurückgesetzt ausgebildet sind, wodurch zwischen aneinander geschweißten Teilschalen (7a, 7b) oder Schalen (7) und Horizontalflanschen (13) oder Teilschalen (7a, 7b) und Horizontalflanschen (13) Freiräume (11d) gebildet sind, wobei die Freiräume (11d) durch Passelemente aus Kunststoff oder dergleichen verschlossen sind.

## Claims

1. Method for erecting a tubular tower structure, in particular a substructure tower for existing wind energy tower structures, wherein
- shells (7) which have a cross-section substantially in the shape of a circular arc are formed from steel plates, wherein - along each planned axial connecting line, an axial longitudinal flange (11) of the shell (7) is created by bending radially inwards or outwards from the shell (7), wherein
- to erect the tubular tower structure (1), the shells (7) are arranged next to each other by means of the longitudinal flanges (11) of adjoining shells (7), and are connected by the longitudinal flanges (11) of adjoining shells (7) to form a tubular segment (4), wherein connecting means (16) engage through holes (12) of adjoining longitudinal flanges (11), wherein
- the circular arc curvature of the shells (7) is created by a plurality of angular bends along the circumference, thereby forming a plurality of surfaces (8a) arranged sequentially one after the other in the circumferential direction, angled with respect to each other, **characterised in that**
- for connecting a tubular segment (4) to a foundation or to a further tubular segment (4), or to a further tubular tower structure, in a tubular segment base region (5) and/or in a tubular segment top region (6), each of the shells (7) comprises, on a horizontal end face (10), a horizontal flange (13) which has at least one abutting edge (14),
wherein
the surfaces (8a) are each bent at an angle of between 1° and 8°, in particular 3° and 6°, with respect to each other,
wherein
the steel plates for producing the shells (7) have a thickness of 20 mm to 100 mm, in particular 40 mm to 100 mm.

2. Method according to claim 1, **characterised in that** the shells (7) are formed from a plurality of axially adjoining, axially sequentially arranged, partial shells (7a, 7b) which are welded to each other, wherein the horizontal flanges (13) of the shells (7) are connected to each other with connecting pieces to form a ring.

3. Method according to any of the preceding claims, **characterised in that**, to form a tubular segment (4), four to sixteen shells (7), are arranged next to each with a given width via their peripheral surfaces (8) and the corresponding longitudinal flanges (11), wherein, for the purpose of arranging a plurality of tubular segments (4) next to each other, the horizontal flanges (13) and/or flange rings formed by the flanges (13) are arranged with their holes aligned with each other, wherein a torsion ring (15) which spaces the horizontal flanges (13) from each other is inserted between the horizontal flanges (13) to improve the load input into the connecting means (16), and the torsion ring (15) is a ring with an outer diameter which corresponds approximately to the outer diameter of the flange ring made up of the horizontal flanges (13), and is designed with an inner diameter which also corresponds approximately to the inner diameter of the flange ring made up of the horizontal flanges (13), wherein the torsion ring (15) has axial holes that correspond to the holes in the flange rings.

4. Method according to claim 3, **characterised in that** the torsion ring has a thickness which corresponds to approximately from one third to two thirds of its width, wherein the torsion ring (15) is constructed as a single piece or in segments, and the torsion ring (15) - for a segmented construction - is arranged in such a way that the abutting edge and/or dividing line (17) of the torsion ring (15) is offset from the abutting edges (14) of the horizontal flanges (13).

5. Method according to any of the preceding claims, **characterised in that** the flange pairs and/or the flanges of adjoining shells (7) are connected with screw bolts, rivets, screws with compression sleeves, or locking ring bolts.

6. Method according to any of the preceding claims, **characterised in that** the tubular tower structure (1) has a first diameter at one axial end and a second diameter at an opposite axial end, the first diameter being larger than the second diameter, such that the tubular tower structure (1) has a conical structure, wherein a tower of a wind turbine generator can be placed onto and fastened to the region of the tubular tower structure with the lesser diameter, and has a base diameter of 4 m to 14 m and a top diameter of 2.5 m to 10 m, and the tubular tower structure (1) is formed from at least one cylindrical tubular segment (4) and one truncated cylindrical tubular segment (4) placed thereon, and the tubular tower structure (1) is formed from at least one conical tubular segment (4).

7. Method according to any of the preceding claims, **characterised in that** a plurality of flat surfaces (8a) is formed by means of a plurality of bending steps, wherein a number of from 5 to 30 flat surfaces (8a) is formed, depending on the width of the shell (7), wherein each of the bend angles of the surfaces (8a) with respect to each other depends on the number of surfaces (8a) and the width of the shell (7), on the one hand, and the number of shells (7) and the total tower circumference, on the other hand, wherein the surfaces (8a) are subdivisions of the circumferential angle of the shell (7), and accordingly the individual bend angles form a corresponding fraction of the total angle of the circumference of the shell (7).

8. Method according to any of the preceding claims, **characterised in that**, for the installation of a door in the tubular tower structure (1), a shell (7) is constructed in a modular manner in this region, the corresponding shell (7) having a door portion (71) which is inserted axially between partial shells (70, 72), and the door portion (71) has longitudinal flanges (11) with which it is detachably arranged on adjoining shells (7), wherein the door section (71) has a horizontal flange (13) in both its base region and in its top region, which can be detachably connected to corresponding horizontal flanges (13) of partial shells (70, 72) arranged axially above and below.

9. Tubular tower structure erected using a method according to any of claims 1 to 8,
wherein
the tubular tower structure (1) has at least one tubular segment (4), the tubular segment (4) being formed from a plurality of shells (7) having the shape of a circular arc in cross-section, wherein the shells (7) have peripheral surfaces (8) formed in the shape of a circular arc, and have longitudinal edges (9) running longitudinally and/or axially, and end faces (10) running horizontally,
wherein longitudinal flanges (11) extend radially from the longitudinal edges (9) as an integral, bent part from the peripheral surface (8) to the interior or exterior of the tubular tower structure (1) from the peripheral surface (8), wherein
the peripheral surface (8) is designed as a segment of a circle from a plurality of flat surfaces (8a) which are bent at an angle to each other and together form the segment of a circle, wherein the shells (7) are arranged with the longitudinal flanges (11) abutting each other, wherein connecting means (16) engage through holes (12) of adjoining longitudinal flanges (11), **characterised in that**
each of the surfaces (8a) is bent at an angle with respect to each other of between 1° and 8°, in particular 3° and 6°, wherein the steel plates for producing the shells (7) have a thickness of 20 mm to 100 mm, in particular 40 mm to 100 mm, and **in that**
for connecting a plurality of tubular segments (4) and/or for arranging the lowest tubular segment (4) of the tubular tower structure (1) on a foundation, or for arranging a tubular tower structure on the uppermost tubular segment (4), the shells (7) of the tubular segments (4) are brought into abutment with each other along their end faces (10), and have horizontal flanges (13) which, in particular, are welded-on, and are L-shaped in cross-section.

10. Tubular tower structure according to claim 9, wherein the horizontal flanges (13) of each of the shells (7) connected to each other form a closed ring after the tubular segment (4) has been assembled from the shells (7).

11. Tubular tower structure according to any of claims 9 or 10, **characterised in that**, for the connection of tubular segments (4) to each other or the uppermost tubular segment (4) to a tubular tower structure above, the tubular segments (4) are arranged one above the other with their flanges (13) and the corresponding holes (12) aligned, wherein the horizontal flanges (13) are spaced apart from each other by a torsion ring (15) which is arranged between the flange rings made of the horizontal flanges (13) and which has holes aligned with the holes (12), such that, for connecting the flanges to each other, the flanges and the torsion ring are connected to each other.

12. Tubular tower structure according to any of claims 9 to 11, **characterised in that** the tubular segments (4) are conical and/or cylindrical, such that the shells (7) are designed in the manner of a cylinder jacket segment or a truncated cone jacket segment, wherein the tubular tower structure (1) and/or different tubular segments (4a, 4b) of the tubular tower structure (1) are formed from differently designed partial shells (7a, 7b, 70, 71, 72), and the shells (7) of the tubular segments (4a) which are installed in a base region (3) of the tubular tower structure (1) differ from the shells (7) that are installed in regions of an upper tubular segment (4b), wherein the partial shells (7a, 7b) that are installed in an upper tubular segment (4b) are narrower overall because of the narrowing of the tubular tower structure (1), such that the partial shells (7a, 7b) of the lower tubular segment (4a) differ from those of the upper tubular segment (4b) also due to the number of flat surfaces (8a) which are bent at an angle to each other and/or the number of the bent edges (8b), wherein, in the region of the lower tubular segment (4a), the partial shells (7a, 7b) have 10 to 20 bent, flat surfaces (8a), whereas, in the region of the upper tubular segment (4b), 3 to 10 surfaces (8a), in particular 5 to 6 surfaces (8a), are present.

13. Tubular tower structure according to any of claims 9 to 12, **characterised in that** the tubular segments (4, 4a, 4b) are formed from the shells (7) extending over the axial length of the tubular segment (4, 4a, 4b) or from two or more axially adjoining partial shells (7a, 7b), wherein the partial shells (7a, 7b) are welded to each other along mutually adjoining end faces (10), wherein the complete shell (7) of a first tubular segment (4a) has a horizontal flange (13) welded to a lower partial shell (7a) and a horizontal flange (13) welded to the end face of the upper partial shell (7b), wherein the upper partial shell (7b) is welded with a lower, horizontally-running edge abutting flush with an upper, horizontally running edge (10) of the lower partial shell (7a), and the longitudinal flanges (11) of the shells (7) are designed to be set back a small amount axially from the horizontal edges (10), such that free spaces (11d) are formed between partial shells (7a, 7b) or shells (7) and horizontal flanges (13) which are welded to each other, or partial shells (7a, 7b) and horizontal flanges (13) which are welded to each other, wherein the free spaces (11d) are closed off by fitting elements made of plastic or the like.

## Revendications

1. Procédé pour ériger une construction de tour tubulaire, en particulier une tour de support pour des constructions existantes de tours éoliennes, dans lequel
- des coques (7) de section transversale sensiblement en forme de segment annulaire sont formées à partir de plaques d'acier, dans lequel
- une bride longitudinale axiale (11) de chacune des coques (7) étant pliée radialement vers l'intérieur ou vers l'extérieur de la coque (7) le long de lignes de liaison axiales planifiées, dans lequel
- pour ériger la construction de tour tubulaire (1), les coques (7) sont disposées les unes contre les autres au moyen des brides longitudinales (11) de coques (7) adjacentes et les coques (7) placées les unes contre les autres par les brides longitudinales (11) sont reliées en un segment tubulaire (4), des alésages (12) de brides longitudinales (11) adjacentes étant traversés par des moyens de liaison (16), dans lequel
- la formation de la courbure en forme de segment annulaire des coques (7) a lieu par une pluralité de pliages le long de la périphérie de telle sorte qu'une pluralité de surfaces (8a) successives dans le sens périphérique et formant un angle les unes par rapport aux autres sont formées, **caractérisé en ce que**
- pour relier un segment tubulaire (4) à une fondation ou à un autre segment tubulaire (4) ou à une autre construction de tour tubulaire, dans une zone de pied de segment tubulaire (5) et/ou dans une zone de tête de segment tubulaire (6), les coques (7) possèdent chacune, sur des arêtes frontales horizontales (10), une bride horizontale (13) qui présente au moins un rebord (14),
dans lequel
les surfaces (8a) sont respectivement formées en étant pliées les unes par rapport aux autres selon un angle compris entre 1° et 8°, en particulier entre 3° et 6°,
dans lequel
les plaques d'acier pour la production des coques (7) ont une épaisseur de 20 mm à 100 mm, en particulier de 40 mm à 100 mm.

2. Procédé selon la revendication 1, **caractérisé en ce que** les coques (7) sont formées d'une pluralité de coques partielles (7a, 7b) soudées entre elles, appliquées axialement les unes contre les autres et se succédant axialement, les brides horizontales (13) des coques (7) étant reliées entre elles par des pièces de liaison pour former un anneau.

3. Procédé selon l'une des revendications précédentes, **caractérisé en ce que**, pour former un segment tubulaire (4), quatre à seize coques (7), d'une largeur donnée sur leur surface d'enveloppe (8) et les brides longitudinales (11) correspondantes sont disposées les unes contre les autres, les brides horizontales (13) ou des anneaux de bride formés à partir des brides (13) étant disposés avec leurs alésages alignés les uns contre les autres pour disposer plusieurs segments tubulaires (4) les uns contre les autres, un anneau de torsion (15) étant inséré entre les brides horizontales (13) pour améliorer la transmission de charge dans les moyens de liaison (16), qui écarte les brides horizontales (13) l'une de l'autre et l'anneau de torsion (15) est un anneau dont le diamètre extérieur correspond à peu près au diamètre extérieur de l'anneau de bride constitué des brides horizontales (13) et qui est réalisé avec un diamètre intérieur qui correspond également à peu près au diamètre intérieur de l'anneau de bride constitué des brides horizontales (13), l'anneau de torsion (15) possédant des alésages axiaux qui correspondent aux alésages dans les anneaux de bride.

4. Procédé selon la revendication 3, **caractérisé en ce que** l'anneau de torsion a une épaisseur qui correspond à environ un tiers à deux tiers de sa largeur, l'anneau de torsion (15) étant réalisé d'une seule pièce ou segmenté et l'anneau de torsion (15) étant disposé, dans le cas d'une réalisation segmentée, de telle sorte que le rebord ou la ligne de séparation (17) de l'anneau de torsion (15) soit décalée par rapport aux rebords (14) des brides horizontales (13).

5. Procédé selon l'une des revendications précédentes, **caractérisé en ce que** les paires de brides ou les brides de coques (7) adjacentes sont reliées à l'aide de boulons filetés, de rivets, de vis avec douilles de sertissage ou de boulons à bague de verrouillage.

6. Procédé selon l'une des revendications précédentes, **caractérisé en ce que** la construction de tour tubulaire (1) présente un premier diamètre à une extrémité axiale et un deuxième diamètre à une extrémité axialement opposée, le premier diamètre étant plus grand que le deuxième diamètre, de sorte que la construction de tour tubulaire (1) a une structure conique, une tour d'une installation d'énergie éolienne pouvant être posée et fixée sur la zone de plus petit diamètre de la construction de tour tubulaire et possédant un diamètre de base de 4 m à 14 m et un diamètre de tête de 2,5 m à 10 m et la construction de tour tubulaire (1) étant formée d'au moins un segment tubulaire (4) cylindrique et d'un segment tubulaire (4) en forme de cylindre tronqué posé sur celui-ci et la construction de tour tubulaire (1) étant formée d'au moins un segment tubulaire (4) conique.

7. Procédé selon l'une des revendications précédentes, **caractérisé en ce qu'**une pluralité de surfaces planes (8a) est formée au moyen d'une pluralité d'étapes de pliage, un nombre de 5 à 30 surfaces planes (8a) étant formé en fonction de la largeur de la coque (7), l'angle de pliage respectif des surfaces (8a) les unes par rapport aux autres dépendant du nombre de surfaces (8a) et de la largeur de la coque (7) d'une part et du nombre de coques (7) et de la circonférence totale de la tour d'autre part, les surfaces (8a) subdivisant l'angle de circonférence de la coque (7) et les angles de pliage individuels formant ainsi une fraction correspondante de l'angle total de la circonférence de la coque (7).

8. Procédé selon l'une des revendications précédentes, **caractérisé en ce que**, pour le montage d'une porte dans la construction de tour tubulaire (1), une coque (7) est construite de manière modulaire dans cette zone, la coque (7) correspondante possédant une section de porte (71) qui est insérée axialement entre des coques partielles (70, 72), et la section de porte (71) possédant des brides longitudinales (11), avec lesquelles elle est disposée de manière amovible sur des coques (7) adjacentes, la section de porte (71) disposant dans sa zone de pied et dans sa zone de tête respectivement d'une bride horizontale (13) qui peut être reliée de manière amovible à des brides horizontales (13) correspondantes de coques partielles (70, 72) disposées axialement en amont et en aval.

9. Construction de tour tubulaire érigée par un procédé selon l'une des revendications 1 à 8, dans laquelle la construction de tour tubulaire (1) possède au moins un segment tubulaire (4), le segment tubulaire (4) étant formé d'une pluralité de coques (7) de section transversale en forme de segment annulaire, les coques (7) possédant des surfaces d'enveloppe (8) réalisées en forme de segment annulaire et possédant des arêtes longitudinales (9) s'étendant longitudinalement ou axialement et des arêtes frontales (10) s'étendant horizontalement,
dans laquelle des brides longitudinales (11) s'étendant radialement et pliées à partir de la surface d'enveloppe (8) vers l'intérieur ou l'extérieur de la construction de tour tubulaire (1) s'étendent d'une seule pièce de la surface d'enveloppe (8) à partir des arêtes longitudinales (9), dans laquelle
la surface d'enveloppe (8) est réalisée sous la forme d'un segment circulaire constitué d'une pluralité de surfaces planes (8a) qui sont formées pliées en angle les unes par rapport aux autres et qui forment ensemble le segment circulaire, les coques (7) étant disposées en butée les unes contre les autres avec les brides longitudinales (11), des alésages (12) de brides longitudinales (11) adjacentes étant traversés par des moyens de liaison (16), **caractérisé en ce que** les surfaces (8a) sont respectivement formées en étant pliées les unes par rapport aux autres selon un angle compris entre 1° et 8°, en particulier entre 3° et 6°, les plaques d'acier pour la production des coques (7) ayant une épaisseur de 20 mm à 100 mm, en particulier de 40 mm à 100 mm, et **en ce que**
pour relier une pluralité de segments tubulaires (4) et/ou pour disposer le segment tubulaire (4) le plus bas de la construction de tour tubulaire (1) sur un support ou pour disposer une construction de tour tubulaire sur le segment tubulaire (4) le plus haut, les coques (7) des segments tubulaires (4) sont posées bout à bout le long de leurs arêtes frontales (10) et possèdent des brides horizontales (13) qui sont en particulier soudées, en forme de L en section transversale.

10. Construction de tour tubulaire, selon la revendication 9, dans laquelle les brides horizontales (13) des coques (7) respectives reliées entre elles forment un anneau fermé après l'assemblage du segment tubulaire (4) à partir des coques (7).

11. Construction de tour tubulaire selon l'une des revendications 9 ou 10, **caractérisée en ce que**, pour relier des segments tubulaire (4) entre eux ou le segment tubulaire (4) le plus haut à une construction de tour tubulaire située au-dessus, les segments tubulaires (4) sont superposés en alignement avec leurs brides (13) et les alésages (12) correspondants, les brides horizontales (13) étant espacées l'une de l'autre par un anneau de torsion (15) qui est disposé entre les anneaux de bride constitués par les brides horizontales (13) et qui possède des alésages alignés avec les alésages (12), de sorte que pour relier les brides entre elles, les brides et l'anneau de torsion sont reliés entre eux.

12. Construction de tour tubulaire selon l'une des revendications 9 à 11, **caractérisée en ce que** les segments tubulaires (4) sont de forme conique et/ou cylindrique, de sorte que les coques (7) sont réalisées en forme de segment d'enveloppe cylindrique ou de segment d'enveloppe tronconique, la construction de tour tubulaire (1) ou différents segments tubulaires (4a, 4b) de la construction de tour tubulaire (1) sont formés de coques partielles (7a, 7b, 70, 71, 72) de formes différentes, et les coques (7) des segments tubulaires (4a), qui sont installées dans une zone de pied (3) de la construction de tour tubulaire (1), se distinguent des coques (7) qui sont installées dans des zones d'un segment tubulaire supérieur (4b), les coques partielles (7a, 7b) qui sont installées dans un segment tubulaire supérieur (4b) étant globalement plus étroites en raison du rétrécissement de la construction de tour tubulaire (1), de sorte que les coques partielles (7a, 7b) du segment tubulaire inférieur (4a) se distinguent de celles du segment tubulaire supérieur (4b) également par le nombre de surfaces planes (8a) pliées les unes par rapport aux autres ou leurs arêtes de pliage (8b), les coques partielles (7a, 7b) présentant 10 à 20 surfaces planes pliées (8a) dans la zone du segment tubulaire inférieur (4a), tandis que 3 à 10 surfaces (8a), en particulier 5 à 6 surfaces (8a), sont présentes dans la zone du segment tubulaire supérieur (4b).

13. Construction de tour tubulaire selon l'une des revendications 9 à 12, **caractérisée en ce que** les segments tubulaires (4, 4a, 4b) sont formés par les coques (7) s'étendant sur la longueur axiale du segment tubulaire (4, 4a, 4b) ou sont formés par deux ou plusieurs coques partielles (7a, 7b) axialement adjacentes, les coques partielles (7a, 7b) sont soudées l'une à l'autre le long d'arêtes frontales (10) communes adjacentes, la coque complète (7) d'un premier segment tubulaire (4a) possédant une bride horizontale (13) soudée à une coque partielle inférieure (7a) et une bride horizontale (13) soudée frontalement à la coque partielle supérieure (7b), la coque partielle supérieure (7b) étant soudée bout à bout par une arête inférieure s'étendant horizontalement, en alignement avec une arête supérieure (10) s'étendant horizontalement de la coque partielle inférieure (7a), et les brides longitudinales (11) des coques (7) étant réalisées en léger retrait axial par rapport aux arêtes horizontales (10), ce qui permet de former des espaces libres (11d) entre des coques partielles (7a, 7b) ou des coques (7) et des brides horizontales (13) ou des coques partielles (7a, 7b) et des brides horizontales (13) soudées les unes aux autres, les espaces libres (11d) étant fermés par des éléments d'ajustement en matière plastique ou similaire.
